(19) Europäisches Patentamt
European Patent Office
Office européen des brevets

(11) Veröffentlichungsnummer: **0 154 724 B1**

(12) **EUROPÄISCHE PATENTSCHRIFT**

(45) Veröffentlichungstag der Patentschrift: **24.07.91**

(51) Int. Cl.5: **C08G 59/18**, C08G 59/40, C09D 5/44, C09J 163/00

(21) Anmeldenummer: **84116444.5**

(22) Anmeldetag: **28.12.84**

Die Akte enthält technische Angaben, die nach dem Eingang der Anmeldung eingereicht wurden und die nicht in dieser Patentschrift enthalten sind.

# (54) In Wasser dispergierbare Kunstharze, Verfahren zur Herstellung der Kunstharze und Verwendung der Kunstharze als Bindemittel für Electrotauchlackbäder.

(30) Priorität: **14.03.84 DE 3409188**

(43) Veröffentlichungstag der Anmeldung:
**18.09.85 Patentblatt 85/38**

(45) Bekanntmachung des Hinweises auf die Patenterteilung:
**24.07.91 Patentblatt 91/30**

(84) Benannte Vertragsstaaten:
**AT BE DE FR GB IT NL SE**

(56) Entgegenhaltungen:
**EP-A- 0 059 895**
**EP-A- 0 127 915**
**FR-A- 2 261 295**
**US-A- 3 424 817**

(73) Patentinhaber: **BASF Lacke + Farben Aktiengesellschaft**
**Max-Winkelmann-Strasse 80**
**W-4400 Münster(DE)**

(72) Erfinder: **Batzill, Wolfgang, Dr.**
**Emil-Nolde-Weg 93**
**W-4400 Münster(DE)**
Erfinder: **Dobbelstein, Arnold, Dr.**
**Emil-Nolde-Weg 95**
**W-4400 Münster(DE)**
Erfinder: **Geist, Michael, Dr.**
**Rubensstrasse 251**
**W-4400 Münster(DE)**
Erfinder: **Ott, Günther, Dr.**
**von-Holte-Strasse 101 a**
**W-4400 Münster-Wolbeck(DE)**
Erfinder: **Schön, Georg, Dr.**
**Schillerstrasse 2**
**W-4416 Everswinkel(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft in Wasser dispergierbare Kunstharze, ein Verfahren zur Herstellung der Kunstharze und die Verwendung der Kunstharze als Bindemittel für Elektrotauchlackbäder. Die Erfindung betrifft auch ein Verfahren zum elektrophoretischen Beschichten eines elektrisch leitenden, als Kathode geschalteten Substrats, bei dem das Elektrotauchlackbad die in Rede stehenden Kunstharze als Bindemittel enthält.

Die Verwendung von in Wasser dispergierbaren Kunstharzen auf Basis von Umsetzungsprodukten aus Epoxidverbindungen und Aminen als Bindemittel für Elektrotauchbäder für das kathodische Elektrotauchlackierverfahren ist z. B. aus der EP-A- 59 895 bekannt.

Es besteht ein großes Bedürfnis nach in Wasser dispergierbaren Kunstharzen, die als Bindemittel für Elektrotauchbäder für das kathodische Elektrotauchlackierverfahren verwendbar sind. Die der Erfindung zugrundeliegende Aufgabenstellung besteht demnach in der Bereitstellung von in Wasser dispergierbaren Kunstharzen, die als Bindemittel für Elektrotauchbäder für das kathodische Elektrotauchlackierverfahren geeignet sind.

Diese Aufgabe wird überraschenderweise durch die Bereitstellung eines in Wasser dispergierbaren Kunstharzes gelöst, das erhältlich ist durch die Umsetzung

A) eines Diepoxides oder eines Gemisches von Diepoxiden mit einem Epoxid-Äquivalentgewicht unter 500 mit

B) Verbindungen mit nur einer gegenüber Epoxidgruppen reaktiven alkoholischen Hydroxylgruppe im Molverhältnis von 2:1 bis 7:6, bevorzugt 2:1 bis 5:4, besonders bevorzugt 2:1 bis 4:3 bei Temperaturen von 100 bis 180 °C in einem hydroxylgruppenfreien organischen Lösungsmittel zu einem endständige Epoxidgruppen aufweisenden Reaktionsprodukt mit einem mittleren Molekulargewicht von 400 bis 5000 und weitere Umsetzung dieses Reaktionsproduktes mit

D) primären und/oder sekundären Aminen oder deren Salzen und/oder dem Salz eines tertiären Amins oder einer Sulfid/Säure - oder Phosphin/Säure Mischung und gegebenenfalls zumindest teilweiser Neutralisierung mit einer Säure.

Das aus den Komponenten A) und B) erhaltene Reaktionsprodukt kann gegebenenfalls vor der Umsetzung mit der Komponente D) mit C) 5 bis 60 Gewichtsprozent, bezogen auf die Summe der Komponenten A), B) und C) eines polyfunktionellen Alkohols, einer Polycarbonsäure, eines Polyamins, eines Polysulfids mit einem Molekulargewicht von 100 bis 3500 oder eines Polyphenols der folgenden allgemeinen Formel

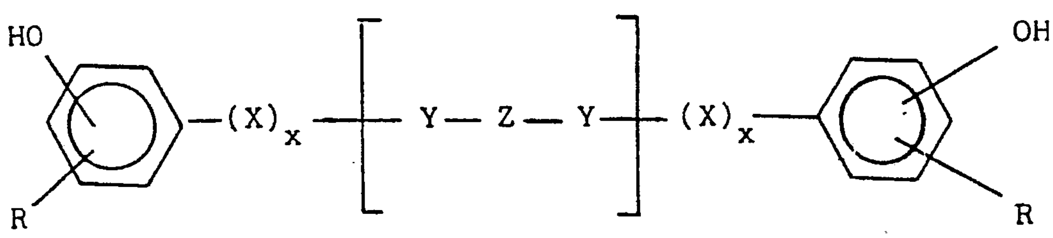

in der bedeuten

X =

Alkylen, Arylen, Alkarylen
O, O-Alkylen, O-Arylen, O-Alkarylen
S, S-Alkylen, S-Arylen, S-Alkarylen
CO, CO-Alkylen, CO-Arylen, CO-Alkarylen
NH, NH-Alkylen, NH-Arylen, NH-Alkarylen

x =

0 oder 1

$$Y = X,\ -\overset{\overset{O}{\|}}{C}-O,\ -\overset{\overset{H}{|}}{C}=N-,\ -\overset{\overset{H}{|}}{N}-\overset{\overset{O}{\|}}{C}-$$

Z =

Alkylen, Alkylenrest auf Basis von Polyestern, Polyethern, Polyamiden, Polycarbonaten, Polyurethanen

R =

H, $CH_3$, Alkyl, -O - $CH_3$, - O-Alkyl,

$-NO_2$

weiter umgesetzt werden, wobei der Anteil der Komponente C) in Abhängigkeit von ihrem Molekulargewicht so gewählt wird, daß das molare Verhältnis des Reaktionsproduktes aus A) und B) zur Komponente C) 4 : 1 bis 0,8 : 1, bevorzugt 2 : 1 beträgt.

Bei der Umsetzung des Polyepoxids A) mit der Komponente B) laufen folgende Reaktionsschritte ab.

1. Teilabschnitt: Öffnen eines Oxiranringes durch den Monoalkohol zu einer Zwischenstufe

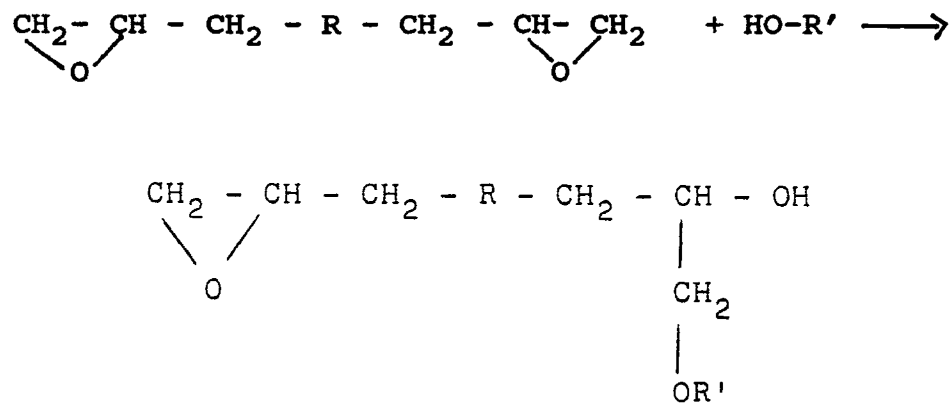

und anschließend

2. Teilabschnitt: Öffnen eines weiteren Oxiranrings durch die in dem 1. Teilabschnitt gebildete Hydroxylgruppe

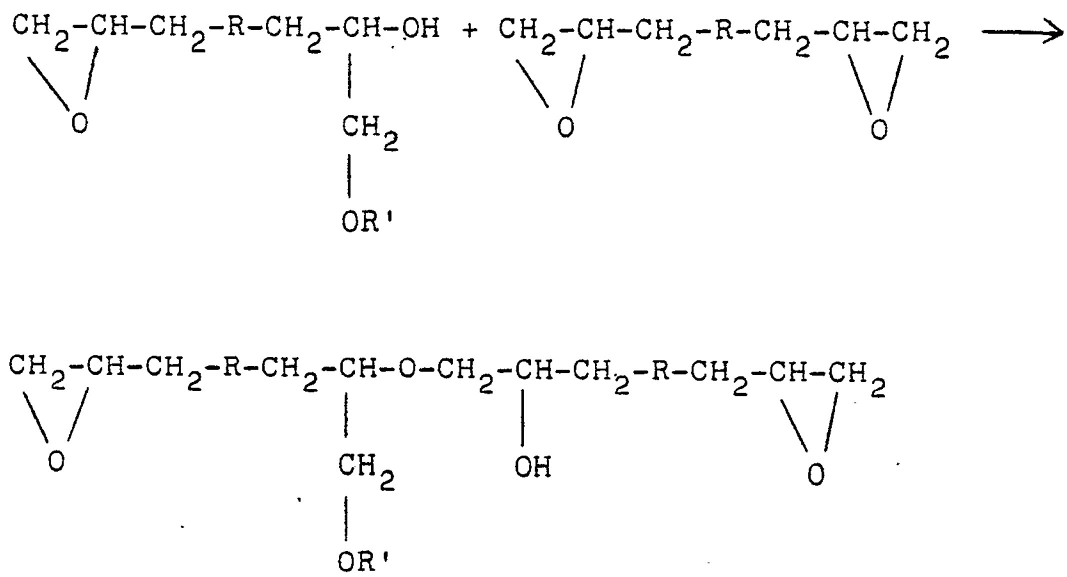

R' =

org. Reste des Alkohols

R

steht für die Reste folgender oder ähnlicher Strukturen

R =

x bzw. -o-x-o-

x = Alkylen, Cycloalkylen

z.B.

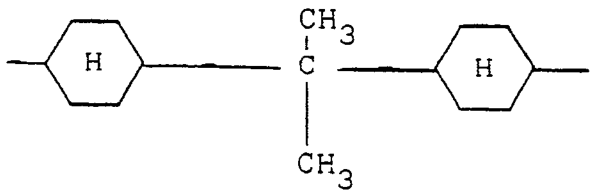

R= 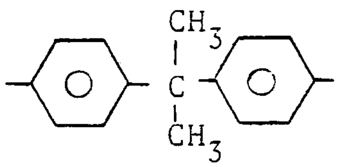 , 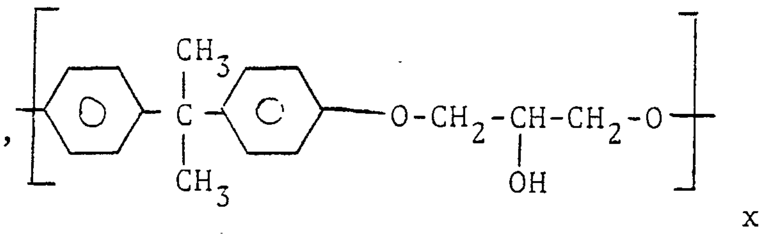

R= 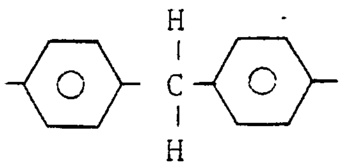 , 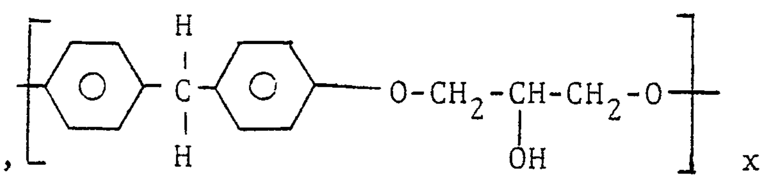

R= 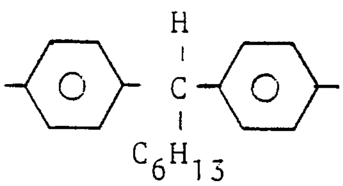 , 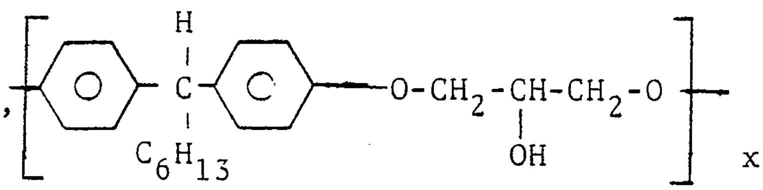

mit x ≧ 1

R = 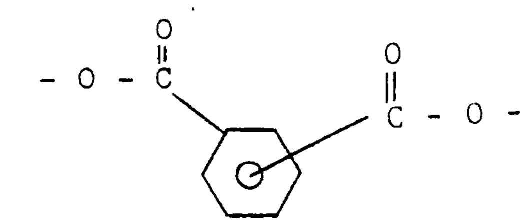

Zur Umsetzung eignen sich prinzipiell alle Monoalkohole.

Geeignete Monoalkohole sind Methanol, Ethanol, Propanol, Isopropanol, Butanol, Isobutanol, Amylalkohol, Isoamylalkohol, 2-Ethylbutanol, 2-Ethylhexanol, Isononylalkohol, Isodecylalkohol, Isotridecylalkohol, Isohexadecylalkohol, Isooctadecylalkohol sowie Neopentylalkohol, 3,7-Dimethyl-3-octanol, 3-Cyclohexylpropanol, 2,4-Dimethylpentan-3-ol.

Ebenfalls sind ungesättigte Monoalkohole geeignet wie Buten-1-ol-3, 2-Methylbuten-3-ol-2 und 3-Methylpenten-1-ol-3.

Geeignete aliphatische Alkohole sind Benzylalkohol, 4-Methylbenzylalkohol, Phenylethylalkohol, 2-Phenylpropanol-1.

Desweiteren sind cycloaliphatische Alkohole geeignet wie Cyclohexanol und 4-tertiär-Butylcyclohexanol.

Geeignete Etheralkohole sind Methylglykol, Ethylglykol, Butylglykol, Methyl-, Ethyl- und Butyldiglykol, Methyl-, Ethyl- und Butyltriglykol, Methyl-, Ethyl- und Butylpolyglykol sowie Methoxybutanol, Methoxypropanol, Phenylglykol, Phenyldiglykol, Hexylglykol und Hexyldiglykol.

Weiterhin können folgende Alkohole eingesetzt werden:

Ethylthioethanol und monoalkoholische Präpolymere wie z.B. das Umsetzungsprodukt eines der oben

erwähnten Monoalkohole mit Lactonen wie z.B. ε-Caprolacton.

Zur Umsetzung eignen sich auch alle niedermolekularen Polyole, die nur eine reaktive Hydroxylgruppe und mindestens eine weitere, sterisch stark gehinderte Hydroxylgruppe enthalten, so daß ein linearer Kettenaufbau mit den Epoxidharzen ausgeschlossen ist. Typische Polyole dieser Art sind z.B.: 2,2,4-Trimethylpentandiol-1,3 oder dergleichen Diole, die aus Formaldehyd und geeigneten Ketonen und nachfolgender Reduktion herstellbar sind. Desweiteren sind 2-Methylpropandiol-1,2 und ähnliche Diole geeignet oder auch Diole wie 2-Methylpentin-3-diol-2,5.

Diese Alkohole führen bei der Verwendung in kathodischen Elektrotauchlacken zu besonders dicken Lackfilmen.

Die als Komponente C geeigneten polyfunktionellen Alkohole, Polycarbonsäuren, Polyamine oder Polysulfide haben ein Molekulargewicht von 100 bis 3 500, bevorzugt von 350 bis 1 000.

Die bei der Erfindung in Betracht kommenden Polyole schließen Diole, Triole und höhere polymere Polyole wie Polyesterpolyole, Polyetherpolyole ein.

Für die Komponente C geeignete Polyalkylenetherpolyole entsprechen der allgemeinen Formel:

$$H - \left[ O\,(CHR)_n \right]_m - OH$$

in der R = Wasserstoff oder ein niedriger Alkylrest, gegebenenfalls mit verschiedenen Substituenten, ist; n = 2 bis 6 und m = 3 bis 50 oder noch höher ist. Beispiele sind Poly(oxytetramethylen)glykole und Poly(oxyethylen)glykole.

Die bevorzugten Polyalkylenetherpolyole sind Poly(oxytetramethylen)glykole mit einem Molekulargewicht im Bereich von 350 bis 1 000.

Die Polyesterpolyole können ebenfalls als polymere Polyolkomponente (Komponente C) bei der Erfindung verwendet werden. Man kann die Polyesterpolyole durch Polyveresterung von organischen Polycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure und Glutarsäure. Anstelle dieser Säuren können auch ihre Anhydride, soweit diese existieren, verwendet werden.

Ferner lassen sich bei der Erfindung auch Polyesterpolyole, die sich von Lactonen ableiten, als Komponente (C) benutzen. Diese Produkte erhält man durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$- \overset{\overset{\displaystyle O}{\|}}{C} - (CHR)_n - CH_2O -$$

entsprechen, in der n mindestens 4, bevorzugt 4 bis 6, ist und der Substituent Wasserstoff, ein Alkylrest, ein Cycloalkylrest oder ein Alkoxyrest ist.

In einer weiteren vorteilhaften Ausgestaltung der Erfindung werden langkettige Dicarbonsäuren eingesetzt. Beispiele hierfür sind Dimerfettsäuren, wie etwa die dimere Linolsäure.

Geeignete Polyamine zur Elastifizierung kann man z.B. durch Umsetzung von primären Diaminen und Monoepoxiden darstellen. Die gebildeten sekundären, substituierten Diamine modifizieren die erfindungsgemäßen Epoxidharze in geeigneter Weise.

Als polyfunktionelle SH-Verbindungen (Komponente C) kommen Umsetzungsprodukte von organischen Dihalogeniden mit Natriumpolysulfid in Betracht. Weitere SH-Verbindungen sind z.B. Umsetzungsprodukte von hydroxylgruppenhaltigen linearen Polyestern, Polyethern oder Polyurethanen mit Mercaptocarbonsäuren wie Mercaptoessigsäure, 2-Mercaptopropionsäure, 3-Mercaptopropionsäure, Mercaptobuttersäure.

Für die Komponente (C) geeignete, elastifizierte Polyphenole entsprechen der oben erläuterten allgemeinen Formel

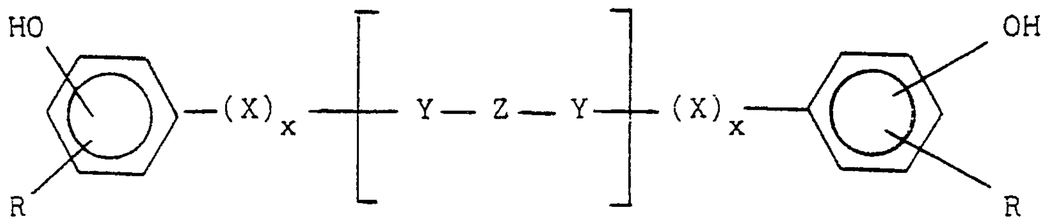

Diese Komponente (C) kann zum Beispiel vorteilhaft auf folgende Weise hergestellt werden. Ein Mol eines höhermolekularen Diols, z.B. eines Polyesterdiols, eines Polycaprolactondiols, eines Polyetherdiols, eines Polycarbonatdiols oder dergleichen, wird mit zwei Molen einer Hydroxyphenylcarbonsäure verestert oder mit zwei Molen eines Hydroxyphenylcarbonsäureesters umgesetzt. Geeignete Hydroxycarbonsäuren sind n-Hydroxybenzoesäure, n-Hydroxyphenylessigsäure und 3-(4-Hydroxyphenyl-) propionsäure oder deren Ester. Wird das Anhängen der Hydroxyphenylgruppe durch Umesterung durchgeführt, kann man auch eine basische Umesterung durchführen und hierzu die Alkaliphenolate der entsprechenden Hydroxyphenylcarbonsäureester einsetzen. Nach Reaktionsende muß das Produkt sauer verarbeitet werden, um das gewünschte Polyphenol zu erhalten.
Zur direkten Veresterung kann zum Beispiel auch N-(4-Hydroxyphenol-)glycin eingesetzt werden. In einer weiteren Variante können beliebige, saure Polyester mit n-Hydroxyanilin zu den erwünschten Polyphenolen umgesetzt werden.

In einer anderen vorteilhaften Ausgestaltung werden Polyetherdiamine oder ähnliche Polyamine mit z.B. 4-Hydroxy-3-meth-oxybenzaldehyd zu den Polyphenolen umgesetzt.

Das Ausgangspolyepoxid wird mit dem niedermolekularen Monoalkohol der gegebenenfalls noch mindestens eine weitere, sterisch stark gehinderte Hydroxylgruppe enthält, in so einem stöchiometrischen Verhältnis umgesetzt, daß man höhermolekulare Epoxidharze erhält. Die noch intakten Oxirangruppen enthaltenden Epoxidharze können nun in gewohnter Weise gegebenenfalls aus Lösung mit Härtungsmitteln abgemischt werden.

Als Härtungsmittel können praktisch alle mit Oxirangruppen reagierenden, mindestens bi-funktionelle Verbindungen eingesetzt werden, z.B. Polyalkohole, Polyphenole, Polycarbonsäuren und ihre Anhydride, Amide, Amine, Polyisocyanate, Phenoplaste usw. Diele Mischungen können für kalt- und wärmehärtende Lacke, für gefüllte und ungefüllte Gießharze, z.B. zum Einbetten elektronischer Teile, Imprägnieren von Wicklungen eingesetzt werden. Desweiteren eignen sich diese Mischungen als Bindemittel für faserverstärkte Harze und für hochwertige Klebstoffe.

Für die Verwendung der erfindungsgemäßen Epoxidharze in wässrigen Systemen ist es notwendig, ionische Gruppen in die Harze einzuführen. So kann man durch geeignete Maßnahmen Säuregruppen einführen, die nach Neutralisation mit Aminen ein wasserlösliches Harz ergeben.

Für die inzwischen weitverbreitete Elektrotauchlackierung metallischer Substrate wird heutzutage bevorzugt die kathodische Elektrotauchlackierung eingesetzt. Hierbei trägt das Harz positive Ladungen.

Diese können z.B. durch Umsetzung der Epoxidharze mit Aminen und anschließende Neutralisation mit Carbonsäuren erzeugt werden.

Das für diese Umsetzung mit der Epoxidverbindung verwendete Amin kann primär oder sekundär sein, wobei sekundäre Amine sich besonders gut eignen. Primäre und sekundäre Amine können direkt an den Epoxidring angelagert werden. Tertiäre Amine können nur über eine weitere funktionelle Gruppe im Molekül eingebaut werden. Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie z.B. Methylethanolamin, Diethanolamin. Ferner sind Dialkylaminoalkylamine wie z.B. Dimethylaminoethylamin, Diethylaminopropylamin geeignet.

In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die Umsetzung des Amins mit der epoxygruppenhaltigen Verbindung tritt häufig schon beim Vermischen dieser Materialien ein. Es kann aber gegebenenfalls eine Erwärmung auf mäßig erhöhte Temperaturen wünschenswert sein, z.B. auf 50 bis 150 °C, doch sind Umsetzungen auch bei niedrigeren und höheren Temperaturen möglich. Häufig ist es vorteilhaft, zur Beendigung der Umsetzung die Temperatur gegen das Ende der Reaktion mindestens geringfügig für eine ausreichende Zeit zu erhöhen, um eine vollständige Umsetzung sicherzustellen.

Für die Umsetzung mit der epoxyhaltigen Verbindung sollte mindestens eine solche Menge an Amin verwendet werden, daß das Harz einen kationischen Charakter annimmt, d.h. daß es unter dem Einfluß einer Spannung in dem Beschichtungsbad zu der Kathode wandert, wenn es durch Zugabe einer Säure löslich gemacht worden ist. Es können im wesentlichen alle Epoxygruppen des Harzes mit einem Amin umgesetzt werden. Es ist aber auch möglich, überschüssige Epoxygruppen in dem Harz zu belassen, die bei der Vermischung mit Wasser unter Bildung von Hydroxylgruppen hydrolisieren.

Eine weitere Möglichkeit, die erforderliche Wasserdispergierbarkeit zu erzielen, besteht darin, Mannich-Basen, d.h. Umsetzungsprodukte geeigneter, zur Reaktion mit einem Epoxidring geeignete Gruppen tragender Phenole mit Formaldehyd und einem sekundären Amin, zu verwenden. Hierdurch wird das Bindemittel gleichzeitig selbstvernetzbar.

Zur Neutralisation der Amine geeignete Säuren, die bei der Erfindung verwendet werden können, schließen Borsäure oder andere Säuren mit einer größeren Dissoziationskonstante als Borsäure ein, bevorzugt organische Säuren mit einer Dissoziationskonstante von größer als etwa $1 \times 10^{-5}$. Die bevorzugte Säure ist Essigsäure. Beispiele von anderen Säuren sind Ameisensäure, Milchsäure, Propionsäure, Buttersäure, Salzsäure, Phosphorsäure, Schwefelsäure und Kohlensäure.

Die erforderlichen Ladungen können auch durch Umsetzung der Oxirangruppen mit Salzen eines Amins oder einer Sulfid/Säure- oder Phosphin/Säure-Mischung erzeugt werden. Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin; Triethylamin, Trimethylamin, Triisopropylamin und dergleichen. Beispiele von anderen geeigneten Aminen sind in der US-PS 3 839 252 in Spalte 5, Zeile 3 bis Spalte 7, Zeile 42 angegeben.

Die Amin-Säuresalzmischung wird durch Umsetzung des Amins mit der Säure in bekannter Weise erhalten. Es können auch Amin-Säuremischungen verwendet werden, obwohl sie in der Regel unter Bildung des Säuresalzes reagieren.

Die Reaktionstemperatur für die Umsetzung der Amin-Säuresalze mit den Polyepoxiden kann zwischen der niedrigsten Temperatur, bei der die Umsetzung mit einer nennenswerten Geschwindigkeit verläuft, zum Beispiel Raumtemperatur oder in der Regel etwas höher als Raumtemperatur, bis zu einer maximalen Temperatur zwischen etwa 100 und etwa 110 °C variiert werden. Ein Lösungsmittel ist bei der Umsetzung nicht erforderlich, obwohl es häufig zugegeben wird, um die Reakation besser steuern zu können. Als Lösungsmittel kommen aromatische Kohlenwasserstoffe oder Monoalkyläther von Ethylenglykol in Betracht.

Das Verhältnis zwischen dem Amin-Säuresalz und der Epoxyverbindung kann schwanken und die optimalen Verhältnisse hängen von den speziellen Ausgangsstoffen ab. Im allgemeinen können etwa 1 bis etwa 50 Gewichtsteile Salz auf 100 Gewichtsteile Polyepoxid verwendet werden. Im allgemeinen wird das Verhältnis in Abhänigkeit von dem sich vom Quaternisierungsmittel ableitenden Stickstoffgehalt gewählt, der typischerweise etwa 0,05 bis etwa 16 %, bezogen auf das Gesamtgewicht des Aminsalzes und des Polyepoxides ausmacht.

Die Harze können den gesamten Stickstoff in Form von chemisch gebundenen quarternären Ammoniumsalzgruppen enthalten, obwohl in manchen Fällen weniger als 100 % des Stickstoffs in Form von quarternären Ammoniumsalzgruppen vorliegt. Ein Beispiel für einen derartigen Fall liegt dann vor, wenn primäre und sekundäre Amine zur Herstellung der Harze mit Ammoniomsalzgruppen verwendet werden. Solche Harze enthalten in der Regel sekundäre und tertiäre Aminsalzgruppen.

Harze mit Phosphoniumgruppen kann man herstellen, indem man die vorstehend charakterisierten Epoxidverbindungen mit einem Phosphin in Gegenwart einer Säure unter Bildung eines Harzes mit einer Gruppe einer quarternären Phosphoniumbase umsetzt.

Das verwendete Phosphin kann ein beliebiges Phosphin sein, das keine störenden Gruppen enthält. Beispiele solcher Phosphine sind aliphatische, aromatische oder alicyclische Phosphine, wobei als spezifische Beispiele folgende Phosphine genant seien:
Niedrige Trialkylphosphine, wie Trimethylphosphin, Triethylphosphin, Tripropylphosphin, Tributylphosphin, gemischte niedrige Alkylphenylphosphine, wie Phenyldimethylphosphin, Phenyldiethylphosphin, Phenyldipropylphosphin, Diphenylmethylphosphin, Diphenylethylphosphin, Diphenylpropylphosphin, Triphenylphosphin, alicyclische Phosphine, wie Tetramethylenethylphosphin.

Die verwendete Säure kann eine beliebige Säure sein, die ein quaternäres Phosphoniumsalz bildet. Bevorzugt ist die Säure aber eine organische Carbonsäure. Beispiele von geeigneten Säuren sind Borsäure, Milchsäure, Ameisensäure, Essigsäure, Propionsäure, Buttersäure, Salzsäure, Phosphorsäure und Schwefelsäure.

Die Säure soll bevorzugt eine Dissoziationskonstante von größer als etwa $10^{-5}$ haben.

Das Verhältnis von Phosphin zur Säure ist nicht besonders kritisch. Da ein Äquivalent Säure zur Bildung von einem Mol Phosphoniumgruppe erforderlich ist, wird bevorzugt mindestens etwa ein Äquivalent Säure für jedes Mol der gewünschten Umwandlung von Phosphin zu Phosphonium verwendet.

Die Phosphin/Säuremischung und die Epoxidverbindung werden umgesetzt, indem die Komponenten gemischt werden, wobei manchmal auf mäßig erhöhte Temperaturen erwärmt wird. Die Reaktionstemperatur ist nicht besonders kritisch, und sie wird in Abhängigkeit von den Ausgangsstoffen und ihren Reaktionsgeschwindigkeiten gewählt. Häufig verläuft die Reaktion bei Raumtemperatur oder bei bis auf 70 °C erhöhten Temperaturen befriedigend schnell. In machen Fällen ist es ratsam, höhere Temperaturen wie von etwa 110 °C oder höher zu verwenden. Ein Lösungsmittel ist nicht notwendig, obwohl es häufig zur besseren Kontrolle der Reaktion verwendet werden kann. Beispiele von geeigneten Lösungsmitteln sind aromatische Kohlenwasserstoffe, Monalkyläther von Äthylenglykol und aliphatische Alkohole. Die Mengenanteile des Phosphins und der Epoxidverbindung können variiert werden, und die optimalen Anteile hängen von den speziellen Ausgangsstoffen ab. Üblicherweise werden aber etwa 1 bis etwa 50 Gewichtsteile Phosphin auf 100 Gewichtsteile der Epoxidverbindung verwendet. Die Mengenanteile werden häufig unter Bezugnahme auf den Anteil an Phosphin angegeben, wobei typischerweise etwa 0,1 bis etwa 35 Gew.-% Phosphin, bezogen auf das Gesamtgewicht von Phosphin und Epoxidverbindung verwendet werden.

Harze mit Sulfoniumgruppen kann man herstellen, indem man die vorstehend charakterisierten Epoxyverbindungen mit einem Sulfid in Gegenwart einer Säure unter Bildung eines Harzes mit Gruppen einer tertiären Sulfoniumbase umsetzt.

Als Sulfide können beliebige Sulfide verwendet werden, die mit Epoxygruppen reagieren und keine Gruppen enthalten, die die Umsetzung stören. Das Sulfid kann ein aliphatisches, gemischtes aliphatisch aromatisches, aralkylisches oder cyclisches Sulfid sein. Beispiele von solchen Sulfiden sind Dialkylsulfide, wie Diethylsulfid, Dipropylsulfid, Dibutylsulfid, Dihexylsulfid oder Alkylphenylsulfide, wie Diphenylsulfid, Ethylphenylsulfid, alicyclische Sulfide, wie Tetramethylensulfid, Pentamethylensulfid, Hydroxyalkylsulfide, wie Thiodiethanol, Thiodipropanol, Thiodibutanol.

Als Säure kann eine beliebige Säure verwendet werden, die ein tertiäres Sulfoniumsalz bildet. Bevorzugt ist die Säure aber eine organische Carbonsäure. Beispiele von geeigneten Säuren sind Borsäure, Ameisensäure, Milchsäure, Essigsäure, Propionsäure, Buttersäure, Salzsäure, Phosphorsäure und Schwefelsäure. Die Säure hat bevorzugt eine Dissoziationskonstante von groBer als etwa $1 \times 10^{-5}$.

Das Verhältnis von Sulfid zu Säure ist nicht besonders kritisch. Da ein Äquivalent Säure für die Bildung eines Mols einer Sulfoniumgruppe verwendet wird, wird bevorzugt mindestens ein Äquivalent Säure für jedes gewünschte Mol der Umwandlung von Sulfid zu Sulfonium verwendet.

Die Sulfid/Säuremischung und die Epoxidverbindung werden umgesetzt, indem man die Komponenten mischt und in der Regel auf mäßig erhöhte Temperaturen, wie 70 bis 110 °C, erwärmt. Ein Lösungsmittel ist nicht notwendig, obwohl häufig eines verwendet wird, um eine bessere Kontrolle der Reaktion zu erreichen. Geeignete Lösungsmittel sind aromatische Kohlenwasserstoffe, Monoalkylether von Ethylenglykol und aliphatische Alkohole. Die Mengenanteile des Sulfids und der Epoxidverbindung können variiert werden, und die optimalen Verhältnisse der beiden Komponenten hängen von den speziellen Ausgangsstoffen ab. Üblicherweise werden aber etwa 1 bis 50 Gewichtsteile Sulfid auf 100 Gewichtsteile der Epoxyverbindung verwendet. Die Mengenverhältnisse werden häufig auf den Gehalt an Schwefel bezogen, der typischerweise bei etwa 0,1 bis 35 %, bezogen auf das Gesamtgewicht des Sulfids und der Epoxyverbindung, liegt.

Um unter Verwendung der erfindungsgemäßen Bindemittel hochbeständige Überzüge zu erhalten, ist es vorteilhaft, dem Elektrotauchlack ein Vernetzungsmittel zuzusetzen, das bei erhöhten Temperaturen die Vernetzung des Bindemittels bewirkt, oder das Bindemittel so zu modifizieren, daß es reaktive Gruppen enthält, die bei erhöhten Temperaturen eine Selbstvernetzung bewirken. Ein selbstvernetzendes System

kann vorteilhaft dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen bei Raumtemperatur beständig sind und bei erhöhten Temperaturen entblockt werden und mit den durch die Öffnung der Epoxidringe entstandenen Hydroxylgruppen unter Urethanbildung reagieren.

Häufig angewandte Methoden zur Vernetzung von Bindemitteln sind z. B. in folgenden Offenlegungsschriften publiziert: DE-OS 2 057 799, europäische Patentanmeldungen 12 463 und 4090 und DE-OS 2 752 256. Diese Aufzählung schränkt die Art der Vernetzer jedoch nicht ein.

Wenn Vernetzungsmittel benutzt werden, machen sie in der Regel etwa 5 bis etwa 60 Gew.-% des Bindemittels aus. Bevorzugt sind etwa 20 bis etwa 40 Gew.-% des Bindemittels.

Als Vernetzungsmittel werden bevorzugt blockierte Polyisocyanate eingesetzt, Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300 °C, aber reagiert. Bevorzugt sind die Isocyanate, die etwa 3 bis etwa 36, insbesondere etwa 8 bis etwa 15 Kohlenstoffatome enthalten.

Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten. Dazu werden bekanntlich Polyole mit einem Überschuß von Polyisocyanaten umgesetzt, wodurch Präpolymere mit endständigen Isocyanatgruppen entstehen.

Für die Blockierung der Polyisocyanate können beliebige geeignete aliphatische, cycloaliphatische oder aromatische Alkylmonoalkohole verwendet werden. Es können auch geringe Anteile an höhermolekularen und relativ schwer flüchtigen Monoalkoholen gegebenenfalls mitverwendet werden, wobei diese Alkohole nach ihrer Abspaltung als Weichmacher in den Überzügen wirken.

Andere geeignete Blockierungsmittel sind Hydroxylamine, wie Ethanolamin und Oxime, wie Methylethylketonoxim, Acetonoxim und Cyclohexanonoxim.

Die blockierten Polyisocyanate werden hergestellt, indem man eine ausreichende Menge eines Alkohols mit dem organischen Polyisocyanat umsetzt, so daß keine freien Isocyanatgruppen mehr vorhanden sind. Die Umsetzung zwischen dem organischen Polyisocyanat und dem Blockierungsmittel ist exotherm. Deshalb werden das Polyisocyanat und das Blockierungsmittel bevorzugt bei einer Temperatur, die nicht höher ist als 80 °C, insbesondere niedriger als 50 °C ist, gemischt, um dem exothermen Effekt entgegenzuwirken.

Die genannten Polyisocyanate und Blockierungsmittel können bei geeigneten Mengenverhältnissen auch zur Herstellung der oben beschriebenen teilblockierten Polyisocyanate verwendet werden.

Die erfindungsgemäßen, mit Onium modifizierten Bindemittel eignen sich auch in besonderer Weise zur Herstellung von Pigmentpasten, das heißt, daß das Bindemittel als Reibharz eingesetzt wird.

Bei der Verwendung des Harzes gemäß der Erfindung als Reibharz für die Herstellung einer Pigmentpaste werden die Mengenverhältnisse des epoxyhaltigen organischen Materials und des organischen tertiären Amins, die miteinander umgesetzt werden, bevorzugt so ausgewählt. daß das Trägerharz 0,8 bis 2,0 Stickstoffatome pro Molekül enthält. Geringere Mengen an quaternärem Stickstoff können zu einer schlechten Benetzbarkeit des Pigments führen, wogegen höhere Mengen zur Folge haben, daß die Harze zu wasserlöslich sind.

Man stellt Pigmentpasten nach der Erfindung her, indem man ein Pigment in dem Reibharz in gut bekannter Weise zerkleinert oder dispergiert. Die Pigmentpaste enthält als wesentliche Bestandteile das Reibharz und mindestens ein Pigment.

Außerdem können aber in der Pigmentzusammensetzung noch andere übliche Zusatzstoffe vorhanden sein, wie Weichmacher, Netzmittel, oberflächenaktive Mittel oder Entschäumer.

Die Anreibung der Pigmente erfolgt in der Regel in Kugelmühlen, Sandmühlen, Cowles-Mühlen und kontinuierlichen Mahlvorrichtungen, bis das Pigment auf die gewünschte Teilchengröße zerkleinert worden ist und bevorzugt durch das Harz benetzt bzw. darin dispergiert worden ist. Nach dem Zerkleinern sollte die Teilchengröße des Pigments im Bereich von 10 Mikron oder weniger liegen. Im allgemeinen wird auf eine Hegman-Feinheit von etwa 6 bis 8 zerkleinert.

Bevorzugt wird die Anreibung in einer wäßrigen Dispersion des Reibharzes durchgeführt. Die in der anzureibenden Masse anwesende Wassermenge sollte ausreichend sein, um eine kontinuierliche wäßrige Phase zu bilden.

Als Pigment können bei der Erfindung die gut bekannten Pigmente benutzt werden. Im allgemeinen ist Titandioxid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Calciumcarbonat, Aluminiumsilicat, Siliciumdioxid, Magnesiumcarbonat und Magnesiumsilicat können aber

auch verwendet werden. Als farbige Pigmente können beispielsweise Cadmiumgelb, Cadmiumrot, Ruß, Phthalocyaninblau, Chromgelb, Toluidinrot und hydratisiertes Eisenoxid benutzt werden. Wegen weiteren allgemeinen Hinweisen auf die Zerkleinerung von Pigmenten und die Formulierung von Anstrichmassen wird auf folgende Bücher verwiesen:

D. H. Parker, Principles of Surface Coating Technology, Interscience Publishers, New York (1965)

R. L. Yates, Elektropainting, Robert Draper Ltd., Teddington England (1966). H.F. Payne, Organic Coating Technology, Band 2, Wiley and Sons, New York (1961).

Die Erfindung betrifft auch ein Verfahren zur Herstellung eines in Wasser dispergierbaren Kunstharzes, das dadurch gekennzeichnet ist, daß

A) ein Diepoxid oder ein Gemisch von Diepoxiden mit einem Epoxid-Äquivalentgewicht unter 500 mit

B) Verbindungen mit nur einer gegenüber Epoxidgruppen reaktiven alkoholischen Hydroxylgruppe im Molverhältnis von 2:1 bis 7:6, bevorzugt 2:1 bis 5:4, besonders bevorzugt 2:1 bis 4:3 bei Temperaturen von 100 bis 180 °C in einem hydroxylgruppenfreien organischen Lösungsmittel zu einem endständige Epoxidgruppen aufweisenden Reaktionsprodukt mit einem mittleren Molekulargewicht von 400 bis 5000 umgesetzt wird und dieses Reaktionsprodukt mit

D) primären und/oder sekundären Aminen oder deren Salzen und/oder dem Salz eines tertiären Amins oder einer Sulfid/Säure - oder Phosphin/Säure Mischung umgesetzt und das so erhaltene Reaktionsprodukt gegebenenfalls zumindest teilweise mit einer Säure neutralisiert wird.

Das aus den Komponenten A) und B) erhaltene Reaktionsprodukt kann gegebenenfalls vor der Umsetzung mit der Komponente D) mit C) 5 bis 60 Gewichtsprozent, bezogen auf die Summe der Komponenten A), B) und C) eines polyfunktionellen Alkohols, einer Polycarbonsäure, eines Polyamins, eines Polysulfids mit einem Molekulargewicht von 100 bis 3500 oder eines Polyphenols der folgenden allgemeinen Formel

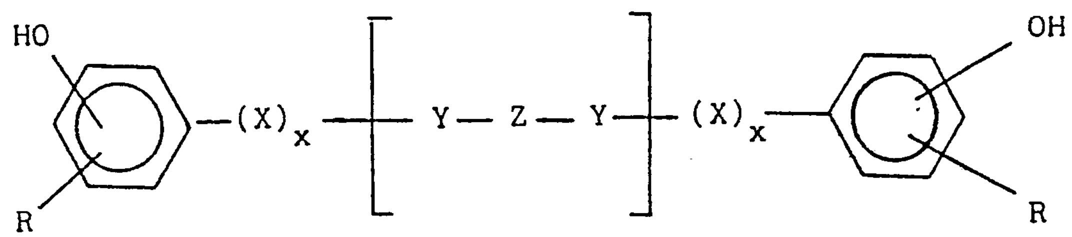

in der bedeuten

X =

Alkylen, Arylen, Alkarylen

O, O-Alkylen, O-Arylen, O-Alkarylen

S, S-Alkylen, S-Arylen, S-Alkarylen

CO, CO-Alkylen, CO-Arylen, CO-Alkarylen

NH, NH-Alkylen, NH-Arylen, NH-Alkarylen

x =

0 oder 1

Y = X, 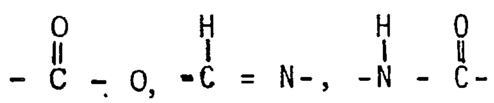

Z =

Alkylen, Alkylenrest auf Basis von Polyestern, Polyethern, Polyamiden, Polycarbonaten, Polyurethanen

R =

H, $CH_3$, Alkyl, -O - $CH_3$, - O-Alkyl,

-$NO_2$

weiter umgesetzt werden, wobei der Anteil der Komponente C) in Abhängigkeit von ihrem Molekulargewicht so gewählt wird, daß das molare Verhältnis des Reaktionsproduktes aus A) und B) zur Komponente C) 4 : 1 bis 0,8 : 1, bevorzugt 2 : 1 beträgt.

Das Verfahren wird folgendermaßen durchgeführt: Die Komponente A) und die Komponente B) werden gemischt und gegebenenfalls unter Hinzugabe von Katalysatoren, wie z. B. tertiären Aminen, bei Temperaturen zwischen 100 und 140 °C, vorzugsweise 115 bis 135 °C, vollständig umgesetzt. Die Umsetzung kann anhand des Epoxidäquivalentgewichtes überprüft werden. Dieses Reaktionsprodukt aus den Komponenten A) und B) kann mit der Komponente C) bei Temperaturen zwischen 100 und 170 °C weiter modifiziert werden. Auch diese Umsetzung kann anhand des Epoxidäquivalentgewichtes kontrolliert werden. Das so erhaltene Reaktionsprodukt enthält noch freie Epoxidgruppen.

Für diesen Reaktionsschritt können die gleichen Katalysatoren verwendet werden wie bei der Umsetzung der Komponenten A und B. Das so erhaltene Reaktionsprodukt kann gegebenenfalls mit Aminen bei Temperaturen zwischen 90 und 120 °C umgesetzt werden, so daß ein Bindemittel entsteht, das basische Aminogruppen enthält. Das basische Reaktionsprodukt kann durch Zugabe von Säuren ganz oder teilweise protonisiert werden und anschließend in Wasser dispergiert werden. Das Vernetzungsmittel kann vor der Dispergierung in Wasser dem Bindemittel zugemischt werden oder je nach Reaktivität während der Herstellung des Bindemittels zugeführt werden. Im Falle von teilblockierten Polyisocyanaten werden diese bei Temperaturen zwischen 80 und 150 °C, vorzugsweise bei Temperaturen zwischen 100 und 130 °C, mit dem Bindemittel umgesetzt. Die erhaltenen Bindemittel stellen stabile gut handhabbare Dispersionen dar. Gegebenenfalls kann es auch zweckmäßig sein, vor der Dispersionsherstellung die Bindemittel in geeigneten organischen Lösungsmitteln zu lösen. Geeignete Lösungsmittel sind z.B. Glykolether, Ethylglykol, Butylglykol, Ketone, wie Ethyldiethylketon, Methylethylketon, Methylisobutylketon.

Die Erfindung betrifft ferner die Verwendung der Bindemittel für Elektrotauchbäder.

Die Elektrotauchbäder können übliche Pigmente enthalten. Häufig wird den Pigmenten ein Dispergiermittel oder ein oberflächenaktives Mittel zugesetzt. Das Pigment und das gegebenenfalls verwendete oberflächenaktive Mittel werden zusammen in einem Teil des Bindemittels oder allein gemahlen, um eine Paste herzustellen, die mit dem restlichen Bindemittel zur Herstellung der Überzugsmasse verschnitten wird.

In manchen Fällen ist es vorteilhaft, dem Elektrotauchbad ein nicht ionisches Modifizierungsmittel oder Lösungsmittel zuzusetzen, um die Dispergierbarkeit, die Viskosität und/oder die Filmqualität zu verbessern. Beispiele von solchen Materialien sind aliphatische, naphthenische und aromatische Kohlenwasserstoffe oder Mischungen davon, Mono- und Dialkylether von Glykolen, sibirisches Fichtennadelöl und andere Lösungsmittel, die mit dem Harzsystem verträglich sind. Das zur Zeit bevorzugte Modifizierungsmittel ist Propylenglykolphenylether.

Dem Elektrotauchbad können außerdem noch andere Zusatzstoffe wie Antioxidantien zugesetzt werden. Beispiele dafür sind ortho-Amylphenol oder Kresol. Die Zugabe solcher Antioxidantien ist dann besonders erwünscht, wenn die Abscheidungsbäder atmosphärischem Sauerstoff bei erhöhten Temperaturen unter Rühren für längere Zeiträume ausgesetzt sind.

Andere Zusätze, die das Bad gegebenenfalls enthalten kann, sind Netzmittel, wie Erdölsulfonate, sulfatierte Fettamine oder ihre Amide, Ester von Natriumisothionaten, Alkylphenoxypolyethylenalkohole oder Phosphatester, einschließlich von ethoxilierten Alkylphenolphosphaten. Andere Gruppen von möglichen Zusätzen sind Antischaummittel und Suspendiermittel. Für die Formulierung des Abscheidungsbades kann normales Leitungswasser verwendet werden. Da ein derartiges Wasser aber relativ hohe Anteile an Salzen enthält, können dadurch unerwünschte Änderungen bei der elektrischen Abscheidung auftreten. Es wird deshalb im allgemeinen entionisiertes Wasser bevorzugt.

Die vorstehend aufgeführten möglichen Zusätze sind nicht vollständig, da beliebige andere Zusätze, die bei der elektrischen Abscheidung nicht stören, benutzt werden können.

Die Erfindung betrifft weiterhin ein Verfahren zum elektrophoretischen Beschichten eines elektrisch leitenden, als Kathode geschalteten Substrats aus einem wäßrigen Bad auf Basis mindestens teilweise mit Säure neutralisierter kationischer Bindemittel, wobei die Bindemittel durch Umsetzung selbstvernetzbar gemacht worden sind oder das Bad ein zusätzliches Vernetzungsmittel enthält, das dadurch gekennzeichnet ist, daß die Bindemittel erhältlich sind durch die Umsetzung

A) eines Diepoxides oder eines Gemisches von Diepoxiden mit einem Epoxid-Äquivalentgewicht unter 500 mit

B) Verbindungen mit nur einer gegenüber Epoxidgruppen reaktiven alkoholischen Hydroxylgruppe im Molverhältnis von 2:1 bis 7:6, bevorzugt 2:1 bis 5:4, besonders bevorzugt 2:1 bis 4:3 bei Temperaturen von 100 bis 180 °C in einem hydroxylgruppenfreien organischen Lösungsmittel zu einem endständige Epoxidgruppen aufweisenden Reaktionsprodukt mit einem mittleren Molekulargewicht von 400 bis 5000 und weitere Umsetzung dieses Reaktionsproduktes mit

D) primären und/oder sekundären Aminen oder deren Salzen und/oder dem Salz eines tertiären Amins oder einer Sulfid/Säure - oder Phosphin/Säure Mischung und gegebenenfalls zumindest teilweiser Neutralisierung mit einer Säure.

Als Substrat kann bei der elektrischen Abscheidung ein beliebiges elektrisch leitendes Substrat dienen.

Üblicherweise handelt es sich dabei um Metallsubstrate, wie z. B. Eisen, Stahl, Kupfer, Zink, Messing, Zinn, Nickel, Chrom und Aluminium sowie um andere Metalle, vorbehandelte Metalle, ferner phosphatierte oder chromatierte Metalle. Auch imprägniertes Papier und andere leitende Substrate können benutzt werden.

Bei der kationischen Abscheidung werden die zu überziehenden Gegenstände in eine wäßrige Dispersion des solubilisierten filmbildenden kationischen Bindemittels eingetaucht. Es wird eine elektrische Spannung zwischen dem zu überziehenden Gegenstand, der als Kathode dient, und einer Anode angelegt und das kationische Bindemittel wird durch den elektrischen Strom auf der Kathode abgeschieden. Der Gegenstand wird dann aus dem Bad entnommen und in der Regel abgespült. Dann wird der Überzug in üblicher Weise durch Erwärmen ausgehärtet.

Die Erfindung wird in den folgenden Beispielen noch näher erläutert. Alle Angaben über Teile und Prozentsätze sind Gewichtsangaben, falls nicht ausdrücklich etwas anderes festgestellt wird.

Darstellung eines Vernetzers I

Gemäß der DE-OS 27 01 002, Beispiel 1, wird ein geblockter Isocyanatvernetzer (Polyurethanvernetzer) hergestellt, indem 218 Teile 2-Ethylhexanol langsam zu 291 Teilen einer 80/20-Isomermischung von 2,4-/2,6-Toluylendiisocyanat unter Rühren und in einer Stickstoffatmosphäre gegeben werden, wobei die Reaktionstemperatur durch äußere Kühlung unter 38° C gehalten wird. Der Ansatz wird noch eine weitere halbe Stunde bei 38° C gehalten und dann auf 60° C erwärmt, wonach 75 Teile Trimethylolpropan und anschließend 0,08 Teile Dibutylzinndilaurat als Katalysator zugegeben werden. Nach einer exothermen Reaktion zu Beginn wird der Ansatz 1,5 Stunden bei 121° C gehalten, bis im wesentlichen die gesamten Isocyanatgruppen verbraucht sind, was an dem Infrarotspektrum zu erkennen ist. Der Ansatz wird dann mit 249 Teilen Ethylenglykolmonoethylether verdünnt.

Darstellung eines Vernetzers II

Gemäß der EP 00 40 867 Beispiel 2d) wird ein Polyestervernetzer hergestellt: 192 Teile Trimellitsäureanhydrid und 500 Teile Versaticsäureglycidylester, mit einem Epoxidäquivalentgewicht von 250, werden vermischt und unter Rühren auf 100° C erwärmt. Es tritt eine exotherme Reaktion auf, und die Temperatur steigt auf 190° C. Nach Abkühlen auf 140° C werden 2 Teile Benzyldimethylamin zugegeben. Die Mischung wird 3 Stunden bei 140° C gehalten. Es entsteht ein viskoses, klares Produkt, das zusätzlich mit 295 Teilen Ethylenglykolmonobutylether verdünnt wird.

Darstellung eines Vernetzers III

Ein Vernetzungsmittel, das vernetzungsaktive $\beta$-Alkoxyalkylestergruppen trägt, wird folgendermaßen hergestellt:
In einem wärmeträgerölbeheizbaren Reaktionsgefäß mit Wasserabscheider, Rückflußkühler und zwischengeschalteter Raschig-Kolonne werden 1462 g Hexylglykol (10 mol) vorgelegt und unter Inertgaszufuhr und Rühren 1000 g Bernsteinsäureanhydrid (10 mol) eingetragen. Die Reaktionsmischung wird auf 120° C aufgeheizt, wobei die exotherme Wärmetönung die Temperatur kurzzeitig auf 130° C anhebt. Die Temperatur wird gehalten, bis die Säurezahl 230 mg KOH/g beträgt.
Anschließend werden 400 g Xylol, 5 g N-Cetyl-N,N,N-trimethylammoniumbromid und 940 g eines Bisphenol A-Epoxidharzes mit einem Epoxidäquivalentgewicht von 188 (2,5 mol) zugegeben. Die Temperatur wird innerhalb von 1 Stunde wieder auf 130° C angehoben und dort gehalten, bis der Epoxidwert auf null abgesunken ist. Nach Zugabe von 2 g p-Toluolsulfonsäurelösung (25 %ig in n-Propanol) wird die Temperatur innerhalb von 4 Stunden auf 200° C gesteigert, während das entstandene Reaktionswasser kontinuierlich ausgekreist wird. Nach weiterer Steigerung auf 220° C wird die Temperatur gehalten, bis annähernd 90 g Wasser abgeschieden sind, und die Säurezahl auf unter 2 mg KOH/g Festharz abgesunken ist. Sodann wird gekühlt und ohne Verdünnung ausgetragen.

| | |
|---|---|
| Festkörper: | 95,2 Gew.-% (gemessen durch 1-stündiges Erhitzen auf 130° C) |
| Säurezahl: | 1,1 mg KOH/g Festharz |
| Viskosität: | 480 mPas (gemessen nach Verdünnen mit Methyl-Isobutylketon auf 70 Gew.-% bei 25° C) |

Darstellung eines Vernetzungsmittel IV

2 340 g Glycidylester der 2-Methyl-2-Ethylheptansäure werden mit 2 073 g Trimellithsäureanhydrid in

einem Reaktionsgefäß auf 130 °C erhitzt. Hierbei springt die stark exotherme Reaktion an. Durch externe Kühlung wird die Reaktion bei 150° C gehalten, bis eine Säurezahl von 183 erreicht ist. Danach kühlt man auf 90° C ab und setzt 1 450 g MIBK * zu. Anschließend tropft man 835 g Propylenoxid langsam zu. Bei einer Säurezahl 2 wird die Reaktion abgebrochen. Der Festkörper der Harzlösung wird mit weiterem MIBK * auf 70 % eingestellt.

Darstellung eines elastifizierten Polyphenols I

In einem geeigneten Reaktionsgefäß mit Schutzgaseinleitung, werden 500 g eines Polycaprolactondiols (OH-Zahl 210,9) und 286 g p-Hydroxybenzoesäuremethylester vorgelegt. Die Mischung wird auf 140° C aufgeheizt und homogenisiert. Danach gibt man 3,9 g Zinnoctoat zu und erhitzt auf 180° C. Hierbei beginnt die Methanolabspaltung. Nach Ende der Abspaltung läßt man noch eine Stunde bei 180° C rühren und kühlt danach das Produkt ab.

Darstellung eines elastifizierten Polyphenols II

Man verfährt wie bei der Darstellung des Polyphenols I jedoch werden anstelle des Polycaprolactondiols 695 g eines Polytetrahydrofurandiols eingesetzt.

Darstellung eines elastifizierten Polyphenols III

In einem geeigneten Reaktor werden 550 g Adipinsäure, 262 g Neopentylglykol, 49 g Xylol und 0,8 g Dibutylzinnoxid vorgelegt und erhitzt. Bei 132° C beginnt die Wasserabscheidung. Man steigert die Temperatur langsam auf 186° C und hält sie solange, bis die entsprechende Wassermenge ausgekreist ist (90 g). Danach kühlt man auf 100° und gibt 274 g p-Aminophenol zu. Dann steigert man die Temperatur erneut, bei 162° C setzt eine erneute Wasserabspaltung ein. Man steigert die Temperatur langsam auf 185° C und hält sie konstant, bis 45 g Wasser abgespalten sind. Danach destilliert man das Xylol ab. Zur Einbringung des elastifizierten Bindemittels in die Harze wird das Polyphenol auf 100° C vorgewärmt.

Darstellung eines Aminsalzes

In einem geeigneten Reaktionsgefäß legt man 528 Teile Dimethylethanolamin vor. Hierzu gibt man unter kräftigem Rühren 712 Teile 88 %ige Milchsäure. Dann gibt man noch 560 Teile entionisiertes Wasser zu. Durch die Neutralisationswärme steigt die Temperatur an. Man hält sie bei 85°C nach beendeter Zugabe noch 3 Stunden. Danach kühlt man ab und filtriert die Aminsalzlösung.

Darstellung einer Sulfid-Säuresalzmischung

Man verfährt wie bei der Darstellung des Aminsalzes, jedoch werden folgende Komponenten eingesetzt:
617 Teile Bis-(2-hydroxyethyl-)sulfid
662 Teile 88 %ige Milchsäure
521 Teile entionisiertes Wasser

Darstellung eines halbverkappten Isocyanats

In einem trockenen Reaktor werden unter Schutzgas 107 Teile 2,4-Toluylendiisocyanat und 11 Teile Methylisobutylketon vorgelegt. Hierzu tropft man 82 Teile 2-Ethylhexanol. Die Temperatur darf hierbei 65° C nicht übersteigen. Nach Zulaufende hält man die Temperatur noch 2 Stunden und kühlt danach auf Raumtemperatur ab. Bis zur Weiterverwendung muß das Produkt trocken und unter Schutzgas gehalten werden.

Darstellung eines Bindemittels I

In einem Reaktionsgefäß mit Rührer, Rückflußkühler, Innenthermometer und Stickstoffeinlaß werden 1 560 Teile eines flüssigen Epoxidharzes auf Basis Bisphenol A mit einem Epoxidäquivalentgewicht von 188 zusammen mit 242 Teilen Hexylglykol, 41 Teilen Xylol und 7 Teilen Dimethylbenzylamin vorgelegt. Die

*MIBK = Methylisobutylketon

Reaktionsmischung wird auf 130° C erhitzt und bei dieser Temperatur gehalten, bis das Epoxidäquivalentgewicht einen Wert von 350 erreicht hat. Anschließend wird die Reaktionsmischung auf 160° C erhitzt und währenddessen mit 378 Teilen Bisphenol A versetzt. Nach 20-minütiger Umsetzung bei dieser Temperatur wird auf 100° C gekühlt und mit 430 Teilen Xylol verdünnt. Das Epoxidäquivalentgewicht beträgt zu diesem Zeitpunkt 1350. Anschließend werden 122 Teile Diethanolamin und 83 Teile eines Umsetzungsproduktes aus äquimolaren Mengen N,N-Diethylaminoethylamin und Butylenoxid zugefügt. Die Reaktion wird 2 Stunden bei 105°C fortgeführt, bevor mit 120 Teilen Hexylglykol verdünnt und ausgetragen wird. Es resultiert eine klare Harzlösung mit einem Feststoffgehalt von 80 % und einem MEQ-Base-Wert von 0,85 Milliäquivalenten / g Festharz.

Das Bindemittel wird nun in wässrige Dispersionen überführt. Die Komponenten der nachfolgenden Tabelle werden gemischt und mit entionisiertem Wasser (Pos. 1) versetzt. Nach 20-minütigem Homogenisieren wird mit entionisiertem Wasser (Pos. 2) portionsweise weiter verdünnt. Anschließend werden die Dispersionen einer kurzzeitigen Vakuumdestillation unterworfen, wobei die organische Phase aus dem Destillat abgetrennt wird.

| | Disp. I a | Disp. I b | Disp. I c |
|---|---|---|---|
| Bindemittel aus Bsp. 1 | 937,5 | 937,5 | 937,5 |
| Vernetzer aus Bsp. 2-4 | | | |
| Vernetzer I | 528,- | - | - |
| Vernetzer II | - | 528,- | - |
| Vernetzer III | - | - | 388,2 |
| Dibutylzinndilaurat | 8,0 | - | - |
| Blei-II-octoat-Lösung (24 % P6) | - | 28,- | 28,- |
| Entschäumerlösung | 1,2 | 1,2 | 1,2 |
| Eisessig | 23,- | 23,- | 23,- |
| entionisiertes Wasser 1 | 751,5 | 751,5 | 891,3 |
| entionisiertes Wasser 2 | 960,- | 960,- | 960,- |
| Festkörper (60'.130°C) | 34,2 % | 35,1 % | 34,4 % |

Darstellung eines Bindemittels II und einer Dispersion II

In einem geeigneten Reaktor werden 1 175 Teile eines handelsüblichen Epoxidharzes auf Basis Bisphenol A (Epoxidäquivalentgewicht EEW = 188), 325 Teile 2-Ethylhexanol und 75 Teile Xylol vorgelegt und auf 125° C erhitzt. Dann fügt man 7 Teile Dimethylbenzylamin zu und hält die Temperatur bei 138° C bis ein EEW von 1 125 erreicht ist. Dann fügt man 1 155 Teile des Vernetzers I zu. Dadurch fällt die Temperatur auf 90° C ab. Man gibt 94 Teile eines Umsetzungsprodukts von 1 Mol Diethylentriamin mit 2 Molen Methylisobutylketon (MIBK), 70 %ig in MIBK und 75 Teile Methylethanolamin zu. Dadurch steigt die Temperatur wieder an. Man hält sie 1 Stunde bei 115 ° C und mischt dann 123 Teile Propylenglykolmonophenylether und 60 Teile Bleioctoat unter. Das Harz wird in 3 861 Teilen entionisiertem Wasser dispergiert. Dem Wasser wurden zuvor 26 Teile Eisessig und 24 Teile einer handelsüblichen Emulgatorlösung zugesetzt. Der Festkörper der Dispersion liegt bei 35 %.

Darstellung der Bindemittel III und IV und der Dispersion III und IV

Man verfährt wie bei der Herstellung des Bindemittels II und der Dispersion II. Die geänderten Einwaagen sind wie folgt:

| | Beispiel III | Beispiel IV |
|---|---|---|
| Epoxidharz (EEW = 188) | 1225 | 1172 |
| Cyclohexanol | 245 | - |
| Phenylglykol | - | 322 |
| Xylol | - | 75 |
| MIBK | 73 | - |
| Dimethylbenzylamin | 7 | 7 |
| Vernetzer (nach Beispiel)* | 1155 (II) | 1150 (III) |
| Diethanolamin | 171 | 82 |
| Methylethanolamin | - | 58 |
| Hexylglykol | 165 | 122 |
| Bleioctoat | 68 | 60 |
| entionisiertes Wasser | 3808 | 3877 |
| Eisessig | 59 | 51 |
| Emulgatorlösung | 24 | 24 |

* Der Vernetzer wird nicht wie im Beispiel II bei Erreichen der EEW-Grenze (für Beispiel III: EEW = 875, für Beispiel IV: EEW = 930) zugegeben, sondern nach dem Untermischen des Hexylglykol. Hierzu kühlt man die Harzlösung auf 95° C ab.

Darstellung eines Bindemittels V

In einem geeigneten Reaktionsgefäß werden 1 098 Teile eines handelsüblichen Epoxidharzes auf Basis Bisphenol A (Epoxidäquivalentgewicht EEW = 188), 322 Teile Phenylglykol und 71 Teile Xylol vorgelegt und auf 133° C erhitzt. Sobald die Temperatur 125° C erreicht hat, gibt man 7 Teile Dimethylbenzylamin zu und läßt die Temperatur weiter ansteigen und hält sie dann bei 133° C bis ein EEW von 1 170 erreicht ist. Man kühlt rasch auf 90° ab und gibt 337 Teile der Aminsalzlösung zu. Dadurch fällt die Temperatur noch weiter ab. Man hält die Temperatur bei 80° C bis die Säurezahl SZ < 1 ist. Dann gibt man 1 162 Teile des Vernetzungsmittels IV, 65 Teile Bleioctoat und 165 Teile Hexylglykol zu. Diese Harzlösung wird dann in 3 773 Teilen entionisiertem Wasser dispergiert. Der Festkörper der Dispersion liegt bei 35 %.

Darstellung eines Bindemittels VI

Man verfährt wie bei der Darstellung der Bindemitteldispersion V, jedoch werden folgende Komponenten eingesetzt.

| | | |
|---|---|---|
| Epoxidharz (EEW 188) | 1 077 | Teile |
| Hexylglykol | 314 | Teile |
| Methylisobutylketon | 90 | Teile |
| Dimethylbenzylamin | 7 | Teile |

Abbruch - EEW = 930

| | | |
|---|---|---|
| Aminsalzlösung | 392 | Teile |
| Vernetzungsmittel I | 1 157 | Teile |
| Propylenglykolmonophenylether | 135 | Teile |
| entionisiertes Wasser | 3 828 | Teile |

Darstellung eines Bindemittels VII

Ein Reaktor, der mit einer Heizeinrichtung, einem Rührer, einem Kühler, einem Thermometer und einem Stickstoffeinlaß ausgerüstet ist, ward mit 1 053 Teilen eines Bisphenol A -Epoxidharzes mit einem Epoxidäquivalentgewicht von 188, 205 Teilen Hexylglykol, 20 Teilen Xylol und 5 Teilen Dimethylbenzylamin beschickt. Die Temperatur wird auf 131° C angehoben und die Reaktion durchgeführt, bis ein Epoxidäquivalentgewicht von 440 erreicht ist. Danach werden 376 Teile eines handelsüblichen Polycaprolactondiols mit einem Molekulargewicht von 535 und weitere 2 Teile Dimethylbenzylamin zugefügt. Die Reaktion wird bei 131° C weitergeführt, bis das Reaktionsgemisch ein Epoxidäquivalentgewicht von 1 100 aufweist. Danach werden 1 260 Teile des Vernetzungsmittels I zugesetzt. Durch externe Kühlung wird die Reaktionstemperatur auf 90° C gesenkt. Das Reaktionsgemisch wird nun mit 110 Teilen eines Umsetzungsproduktes aus 1 Mol Diethylentriamin und 2 Mol Methylisobutylketon (70 %ig in Methylisobutylketon) und 83 Teilen N-Methylethanolamin versetzt, wobei die Temperatur exotherm auf 115° C ansteigt. Die Temperatur wird anschließend noch 1 Stunde bei 110° C gehalten. Danach wird der Reaktionsansatz mit 134 Teilen Propylenglykolphenylether verdünnt und auf 95° C abgekühlt und ausgetragen. Es resultiert eine klare Harzlösung.

Inzwischen wird ein Dispergierbad aus 1 472 Teilen entionisiertem Wasser, 23 Teilen Eisessig und 1 Teil eines handelsüblichen Entschäumers vorbereitet, in das 1 800 Teile der zuvor beschriebenen Harzlösung unter Rühren eingetragen werden. Man läßt das Dispergiergemisch noch 2 Stunden rühren, bevor mit weiteren 942 Teilen entionisiertem Wasser verdünnt wird. Es resultiert eine niederviskose Dispersion mit einem Feststoffgehalt von 35 %.

Darstellung eines Bindemittels VIII

| | |
|---|---|
| Epoxidharz mit einem EEW von 188 | 978 Teile |
| 2-Ethylhexanol | 109 Teile |
| Xylol | 19 Teile |
| Dimethylbenzylamin | 5 Teile |
| Polycaprolactondiol MW = 535 | 349 Teile |
| Dimethylbenzylamin | 2 Teile |
| Vernetzungsmittel I | 1 156 Teile |
| Diethylentriamin-Ketimin analog Beispiel 1 | 102 Teile |
| N-Methylethanolamin | 77 Teile |
| Propylenglykolphenylether | 122 Teile |

| | |
|---|---|
| Harzlösung | 1 800 Teile |
| entionisiertes Wasser | 1 472 Teile |
| Eisessig | 24 Teile |
| Entschäumer | 1 Teil |
| entionisietes Wasser | 942 Teile |

Es wird entsprechend Beipiel zur Darstellung des Bindemittels VII verfahren, jedoch wird hierbei als Monoalkohol 2-Ethylhexanol eingesetzt. Es resultiert eine wässrige Dispersion mit einem Feststoffgehalt von 35 %.

Darstellung eines Bindemittels IX

In einem geeigneten Reaktor werden 718 Teile eines handelsüblichen Epoxidharzes auf Basis Bisphenol A (Epoxidäquivalentgewicht EEW 188), 132 Teile Phenylglykol und 51 Teile Xylol vorgelegt und auf 130° C erhitzt. Dann fügt man 5 Teile Dimethylbenzylamin zu. Nach dem Abklingen der exothermen Reaktion hält man die Temperatur bei 137° C bis ein EEW von 425 erreicht ist, sodann gibt man 287 Teile einer Dimerfettsäure (Pripol 1022 der Unichema) und 3 Teile Dimethylbenzylamin zu und führt die Reaktion bei 130° C weiter bis ein EEW von 1 130 erreicht ist. Dann kühlt man auf 90° C ab.

Jetzt gibt man 36 Teile Methylethanolamin und 50 Teile Diethanolamin zu. Durch die exotherme Reaktion steigt die Temperatur an. Man hält sie eine Stunde bei 115° C. Dann setzt man 750 Teile des Vernetzers IV, 118 Teile Hexylglykol und 43 Teile Bleioctoat zu und mischt 30 Minuten bei 90° C unter. Danach wird die Harzlösung in 2 760 Teilen entionisiertem Wasser, 18 Teilen einer Emulgatorlösung und 29 Teilen Eisessig dispergiert. Der Festkörper der Dispersion liegt bei 35 %.

Darstellung eines Bindemittels X

In einem geeigneten Reaktor werden 703 Teile eines handelsüblichen Epoxidharzes auf Basis Bisphenol A (Epoxidäquivalentgewicht - EEW - 188), 133 Teile 3-Cyclohexylpropanol und 42 Teile Xylol vorgelegt. Man heizt den Reaktionsansatz auf 130° C auf und fügt 4 Teile Dimethylbenzylamin zu. Nach dem Abklingen der exothermen Reaktion hält man den Ansatz bei 137° C bis ein EEW von 430 erreicht ist. Dann fügt man 291 Teile eines Umsetzungsprodukts aus 1 Mol Hexamethylendiamin und 2 Molen Cardura E 10 (EEW 254) zu. Man hält danach den Ansatz bei 130° C bis ein EEW von 1 150 erreicht ist. Hierauf kühlt man den Ansatz rasch auf 90° C ab.

Man fügt danach 98 Teile Diethanolamin zu. Hierbei steigt die Temperatur wieder an. Man hält für 1 Stunde 115° C. Dann gibt man 750 Teile des Vernetzers IV, 121 Teile Phenylglykol und 60 Teile Bleioctoat

zu und mischt bei 90° C während 30 Minuten unter. Danach wird die Harzlösung in 2 813 Teilen entionisiertem Wasser, 17 Teilen einer Emulgatorlösung und 28 Teilen Eisessig dispergiert. Der Festkörper liegt bei 35 %.

Darstellung der Bindemittel XI bis XIII

In einem geeigneten Reaktor wird das Epoxidharz (Basis Bisphenol A, Epoxidäquivalentgewicht EEW = 188) mit dem Monoalkohol und Xylol vorgelegt und auf 125° C erhitzt. Dann fügt man Dimethylbenzylamin zu und hält eine Temperatur von 135° C bis das EEW 1. Stufe erreicht ist. Dann fügt man das elastifizierte Diphenol zu und führt die Reaktion bis zum Erreichen der 2. EEW-Stufe bei 135° C weiter. Man gibt dann den Vernetzer zu. Dadurch sinkt die Temperatur auf 90° C ab. Jetzt werden die Amine zugemischt. Die Temperatur steigt dadurch an. Man hält für eine Stunde bei 110° C. Dann gibt man Hexylglykol und gegebenenfalls Bleioctoat zu. Die Harzlösung wird in entionisiertem Wasser dispergiert, dem man zuvor Eisessig und eine handelsübliche Emulgatormischung zugegeben hat.

Die Einwaagen sind in der folgenden Tabelle aufgelistet.

Einwaagemengen zur Bindemittelherstellung

| Bindemitteldispersion | XI | XII | XIII |
|---|---|---|---|
| Epoxidharz | 870 | 862 | 909 |
| Hexylglykol | 169 | - | - |
| 2-Ethylhexanol | - | 149 | - |
| Phenylglykol | - | - | 167 |
| Xylol | 51 | 50 | 54 |
| Dimethylbenzylamin | 5 | 5 | 5 |
| Diphenol/Typ | 446/I | 510/II | 457/III |
| Ketimin | 124 | - | - |
| Methylethanolamin | 69 | - | 45 |
| Diethanolamin | - | 120 | 64 |

| Bindemitteldispersion | XI | XII | XIII |
|---|---|---|---|
| Vernetzer/Typ | 1 155/I | 1 155/II | 1 155/III |
| Hexylglykol | 159 | 147 | 122 |
| Bleioctoat | - | 73 | 61 |
| entionisiertes Wasser | 3 894 | 3 863 | 3 897 |
| Eisessig | 34 | 41 | 40 |
| Emulgatorlösung | 24 | 25 | 24 |
| EEW 1. Stufe | 430 | 430 | 430 |
| EEW 2. Stufe | 1 225 | 1 250 | 1 200 |

Herstellung der Bindemitteldispersion XIV

In einem geeigneten Reaktor werden 1 116 Teile eines handelsüblichen Epoxidharzes auf Basis Bisphenol A (Epoxidäquivalentgewicht EEW = 188), 325 Teile 2,2,4-Trimethylpentandiol-1,3 und 87 Teile Xylol vorgelegt und auf 125° C erhitzt. Man gibt 7 Teile Dimethylbenzylamin zu und läßt die Temperatur auf 137° C ansteigen. Man hält diese Temperatur bis ein EEW von 940 erreicht ist. Dann gibt man 1 155 Teile des Vernetzers I zu. Dadurch sinkt die Temperatur auf 95° C ab. Jetzt gibt man 160 Teile eines Umsetzungsproduktes von 1 Mol Diethylentriamin und 2 Molen Methylisobutylketon (MIBK), 70 %ig in MIBK und 89 Teile Methylethanolamin zu. Dadurch steigt die Temperatur an. Man hält sie 1 Stunde bei 110° C und gibt dann 171 Teile Hexylglykol zu, die man 15 Minuten untermischt. Die Harzlösung wird dann in 3 829 Teilen entionisiertem Wasser, 36 Teilen Eisessig und 25 Teilen einer Emulgatorlösung dispergiert. Der Festkörper der Dispersion liegt bei etwa 35 %.

Herstellung der Bindemitteldispersion XV bis XVII

In einem geeigneten Reaktor werden das Epoxidharz, das Diol und Xylol vorgelegt. Man heizt diese Mischung auf 125° C auf und fügt Dimethylbenzylamin zu. Die Reaktion wird dann bei 135° C durchgeführt bis das EEW der 1. Stufe erreicht ist. Dann gibt man die Elastifizierungskomponente und gegebenenfalls weiteres Dimethylbenzylamin zu. Man führt die Reaktion weiter bis das EEW der zweiten Stufe erreicht ist. Dann fügt man die Amine zu und hält die Temperatur für 1 Stunde bei 115° C. Hierauf gibt man Hexylglykol, Bleioctoat und Vernetzer zu und mischt diese bei 85° C unter. Danach dispergiert man die Harzlösung in entionisiertem Wasser, das mit Eisessig und einer Emulgatorlösung versetzt ist. Die jeweiligen Einwaagen sind in der folgenden Tabelle aufgelistet.

| Dispersion | XV | XVI | XYII |
|---|---|---|---|
| Epoxidharz | 970 | 937 | 942 |
| 2,2,4-Trimethylpentan - diol-1,3 | 188 | - | - |
| 2-Methylpropandiol-1,2 | - | 112 | 113 |
| Xylol | 69 | 52 | 53 |
| Dimethylbenzylamin | 6 | 5 | 5 |
| EEW-1. Stufe | 430 | 405 | 405 |
| Polycaprolactondiol | 348 | - | - |
| Dimethylbenzylamin | 4 | - | - |
| Polyphenol I | - | 481 | - |
| Polyphenol II | - | - | 474 |
| EEW- 2. Stufe | 1 130 | 1 170 | 1 170 |
| Methylethanolamin | - | 47 | 47 |
| Diethanolamin | 135 | 65 | 66 |
| Vernetzer II | 1 155 | 1 155 | 1 155 |
| Hexylglykol | 147 | 159 | 123 |
| Bleioctoat | 61 | 61 | 61 |

| Dispersion | XV | XVI | XVII |
|---|---|---|---|
| entionisiertes Wasser | 3 843 | 3 857 | 3 888 |
| Eisessig | 50 | 45 | 49 |
| Emulgatorlösung | 24 | 24 | 24 |

Darstellung eines Bindemittels I für ein Reibharz

Zu 953 Teilen eines handelsüblichen Epxidharzes auf Basis Bisphenol A mit einem Epoxidäquivalentgewicht von 890 werden 800 Teile Butylglykol gegeben. Die Mischung wird auf 80° C erhitzt. In die Harzlösung werden dann 221 Teile eines Umsetzungsproduktes aus 101 Teilen Diethanolamin und 120 Teilen 80 %iger wässriger Milchsäure gegeben. Man führt die Reaktion bei 80° C durch bis die Säurezahl unter 1 gefallen ist.

Darstellung eines Bindemittels II für ein Reibharz

In einem geeigneten Reaktionsgefäß werden 1 092 Teile eines handelsüblichen Epoxidharzes auf Basis Bisphenol A (Epoxidäquivalentgewicht EEW = 188), 283 Teile 2-Ethylhexanol und 69 Teile Methylisobutylketon vorgelegt und auf 135° C erhitzt. Bei 125° C gibt man 6 Teile Dimethylbenzylamin zu. Man hält die Temperatur bei 135° C bis ein EEW von 910 erreicht ist. Dann gibt man 467 Teile des halbverkappten Isocyanats zu und hält den Ansatz 1 Stunde bei 125° C. Darauf werden 677 Teile Butylglykol zugegeben. Dadurch kühlt der Ansatz ab. Man stellt eine Temperatur von 80° C ein und gibt 441 Teile der Aminsalzlösung zu. Man hält die Temperatur von 80° C bis die Säurezahl SZ < 1 ist. Danach stellt man mit 465 Teilen Butylglykol die Harzlösung auf einen Festkörper von 60 % ein.

Darstellung eines Bindemittels III für ein Reibharz

Man verfährt wie bei der Darstellung des Bindemittels 3. Man gibt jedoch nach Erreichen eines EEW von 1 150 kein halbverkapptes Isocyanat zu, sondern kühlt sofort auf 80° C ab und fügt die 1. Menge Butylglykol zu. Es werden folgende Komponenten eingesetzt.

| | |
|---|---|
| Epoxidharz (EEW = 188) | 1 393 Teile |
| 2-Ethylhexanol | 385 Teile |
| Methylisobutylketon | 89 Teile |
| Dimethylbenzylamin | 7 Teile |
| Butylglykol | 861 Teile |
| Sulfid-Säuresalzmischung | 474 Teile |
| Butylglykol | 291 Teile |

Darstellung eines Bindemittels IV für ein Reibharz

In einem geeigneten Reaktionsgefäß werden 1 426 Teile eines handelsüblichen Epoxidharzes auf Basis Bisphenol A (Epoxidäquivalentgewicht EEW = 188), 277 Teile 2,2,4-Trimethylpentandiol-1,3und 85 Teile Methylisobutylketon vorgelegt und auf 132° C erhitzt. Sobald 125° C erreicht sind, setzt man 9 Teile Dimethylbenzylamin zu. Man hält dann die Temperatur bei 132° C bis ein EEW von 430 erreicht ist. Dann setzt man 718 Teile des Polyphenols II zu. Man hält die Temperatur bei 132° C bis ein EEW von 1 240 erreicht ist. Dann kühlt man rasch auf 90° C ab und setzt 288 Teile des halbverkappten Isocyanats zu. Man hält die Temperatur für 2 Stunden bei 90° C, dann mischt man 1 067 Teile Butylglykol und 547 Teile der Aminsalzlösung unter. Man hält die Temperatur bei 80° C bis die Säurezahl SZ < 1 ist. Danach stellt man den Festkörper der Harzlösung mit 583 Teilen auf 60 % ein.

Darstellung einer grauen Pigmentpaste (I)

1 800 Teile des Reibharzes I werden mit 2 447 Teilen entionisiertem Wasser vorgelegt und mit 2 460 Teilen $TiO_2$, 590 Teilen eines Extenders auf Basis Aluminiumsilikat, 135 Teilen Bleisilikat und 37 Teilen Ruß vermengt. Diese Mischung wird in einem Mahlaggregat auf eine Hegman-Feinheit von 5 bis 7 zerkleinert. Danach gibt man 1 255 Teile entionisiertes Wasser zu, um die gewünschte Pastenkonsistenz zu erreichen. Diese graue Paste ist sehr lagerstabil.

Darstellung einer grauen Pigmentpaste II

1 800 Teile des Reibharzes II werden mit 2 447 Teilen entionisiertem Wasser vorgelegt und mit 2 460 Teilen $TiO_2$, 590 Teilen eines Extenders auf Basis Aluminiumsilikat, 135 Teilen Bleisilikat und 37 Teilen Ruß vermengt. Diese Mischung wird in einem Mahlaggregat auf eine Hegman-Feinheit von 5 bis 7 zerkleinert. Danach gibt man 1 255 Teile entionisiertes Wasser zu, um die gewünschte Pastenkonsistenz zu erreichen.

Darstellung einer grauen Pigmentpaste (III)

1 800 Teile des Bindemittels IV werden mit 2 447 Teilen entionisiertem Wasser vorgelegt und mit 2 460 Teilen $TiO_2$, 590 Teilen eines Extenders auf Basis Aluminiumsilikat, 135 Teilen Bleisilikat und 37 Teilen Ruß vermengt. Diese Mischung wird in einem Mahlaggregat auf eine Hegman-Feinheit von 5 bis 7 zerkleinert.

Danach gibt man 1 255 Teile entionisiertes Wasser zu, um die gewünschte Pastenkonsistenz zu erreichen.

Darstellung einer weißen Pigmentpaste

1 295 Teile des Reibharzes III werden mit 3 170 Teilen $TiO_2$, 30 Teilen eines kationischen, oberflächenaktiven Mittels und 210 Teilen Butylglykol vermengt. Diese Mischung wird in einem Mahlaggregat auf eine Hegman-Feinheit kleiner 7 gemahlen. Danach gibt man 210 Teile Butylglykol zu, um die gewünschte Pastenkonsistenz einzustellen.

Zubereitung der Elektrotauchbäder I bis IV und Abscheidung von Lackfilmen

Jeweils 2 000 Gewichtsteile der obenbeschriebenen Bindemitteldisperionen werden mit 775 Gewichtsteilen der grauen Pigmentpaste vermischt. Der Badfestkörper wird mit entionisiertem Wasser auf 20 % (150° C, 30') eingestellt. Man läßt dann das Bad 3 Tage unter Rühren altern. Die Abscheidung der Lackfilme erfolgt während 2 Minuten auf zinkphosphatiertem Blech. Die Badtemperatur beträgt hierbei 27° C. Die abgeschiedenen Filme werden bei 180° C während 20 Minuten eingebrannt.

Ergebnis der Abscheidungen

| Bad | I a | I b | I c | II | III | IV |
|---|---|---|---|---|---|---|
| Schichtdicke (/um) bei Spannung ( V ) | 27 / 320 | 31 / 340 | 28/320 | 37/340 | 32/320 | 34/320 |
| Umgriff (cm) bei Spannung | 20,5/ 360 | 21 / 360 | 20,5/380 | 21/360 | 22,5/360 | 21/380 |
| Verlauf* | 1 | 0,5 | 0,5 | 0,5 | 0,5 | 0 |
| Kraterbewertung* | 0,5 | 1 | 0,5 | 1 | 0 | 0 |
| Erichsentiefung (mm) | 7,0 | 9,0 | 9,5 | 8,0 | 9,5 | 9,0 |
| Gitterschnitt * | 0 | 0 | 0 | 0 | 0 | 0 |

* 0 - bester Wert, 5 = schlechtester Wert

Zubereitung der Elektrotauchbäder V - VIII und Abscheidung von Lackfilmen

Jeweils 2 000 Gewichtsteile der obenbeschriebenen Bindemittel V und VI werden mit 775 Teilen der grauen (II) bzw. weißen Pigmentpaste vermischt. Der Badfestkörper wird mit entionisiertem Wasser auf 22

% (150° C, 30') eingestellt. Man läßt die Bäder unter Rühren 3 Tage altern. Die Bäder wurden aus folgenden Komponenten hergestellt.

| | Bindemittel V | Bindemittel VI | Paste weiß | Paste grau (II) |
|---|---|---|---|---|
| Bad V | x | - | - | x |
| Bad VI | x | - | x | - |
| Bad VII | - | x | - | x |
| Bad VIII | - | x | x | - |

Die Abscheidung der Lackfilme erfolgt während 2 Minuten auf zinkphophatiertem Blech. Die Badtemperatur beträgt hierbei 27° C. Die abgeschiedenen Filme werden bei 180° C während 20 Minuten eingebrannt.

Applikationsdaten und Prüfung der Lacke

| | Bad V | Bad VI | Bad VII | Bad VIII |
|---|---|---|---|---|
| Schichtdicke bei 320 V ($\mu$m) | 30 | 32 | 27 | 33 |
| Umgriff * bei 340 V (cm) | 20,8 | 19,7 | 21,5 | 20,1 |
| Erichsentiefung (mm) | 9 | 7,3 | 8,7 | 7,6 |
| Gitterschnitt ** | 0 | 0,5 | 0 | 0,5 |
| Verlauf * * | 0,5 | 1 | 0,5 | 0,5 |
| Kraterneigung ** | 0 | 0,5 | 0 | 0 |

* nach Ford

** 0 = bester Wert, 5 = schlechtester Wert

Zubereitung der Elektrotauchbäder IX bis XII und Abscheidung von Lackfilmen

Jeweils 2 000 Gewichtsteile der obenbeschriebenen Bindemitteldispersion VII bis X werden mit 775 Gewichtsteilen der grauen Pigmentpaste I vermischt. Der Badfestkörper wird mit entionisiertem Wasser auf 20 % (150° C, 30') eingestellt. Man läßt dann das Bad 3 Tage unter Rühren altern. Die Abscheidung der Lackfilme erfolgt während 2 Minuten auf zinkphosphatiertem Blech. Die Badtemperatur beträgt hierbei 27° C. Die abgeschiedenen Filme werden bei 180° C während 20 Minuten eingebrannt.

Abscheideergebnisse

| Bad | IX | X | XI | XII |
|---|---|---|---|---|
| Bindemittel | VII | VIII | IX | X |
| Schichtdicke (µm/V) | 35 | 34 | 28 | 31 |
| Umgriff (cm) | 19,1 | 19,5 | 21,7 | 19,3 |
| Oberfläche * | 1 | 1 | 0,5 | 1 |
| Krater * | 0 | 0,5 | 0 | 1 |

0 = bester Wert, 5 = schlechtester Wert

Zubereitung der Elektrotauchbäder XIII bis XV und Abscheidung von Lackfilmen

Man verfährt wie bei der Herstellung und Abscheidung der Bäder IX bis XII.

Ergebnis der Abscheidung

| Bad | XIII | XIV | XV |
|---|---|---|---|
| Schichtdicke bei Spannung (µm/V) | 37/310 | 34/340 | 32/310 |
| Umgriff bei Spannung (cm/V) | 19,5/320 | 21/370 | 20,5/350 |
| Verlauf * | 0,5 | 1 | 0,5 |
| Krater * | 0 | 0 | 0,5 |
| Erichsentiefung (mm) | 7,5 | 9,0 | 9,5 |

Zubereitung der Elektrotauchbäder XVI bis XIX und Abscheidung von Lackfilmen

Man verfährt wie bei der Herstellung und Abscheidung der Bäder IX bis XII.

Ergebnis der Abscheidungen

| Bad | XVI | XVII | XVIII | XIX |
|---|---|---|---|---|
| Bindemitteldispersion | XIV | XV | XVI | XVII |
| Schichtdicke (/um) bei 360 V | 48 | 51 | 45 | 44 |
| Umgriff (cm) bei 360 V | 19,8 | 20,7 | 21,5 | 20,3 |
| Verlauf * | 0,5 | 1 | 0,5 | 0 |
| Krater * | 0 | 0 | 0 | 0 |
| Erichsentiefung (mm) | 7 | 8,5 | > 10 | > 10 |

0 = bester Wert, 5 = schlechtester Wert

Abscheidung der Elektrotauchbäder XX und XXI und Abscheidung von Lacktilmen

Man verfährt wie bei der Herstellung und Abscheidung der Bäder IX bis XII, jedoch wird die graue Pigmentpaste (III) eingesetzt .

Ergebnis der Abscheidungen

| Bad | XX | XXI |
|---|---|---|
| Bindemittel | XIV | XV |
| Schichtdicke bei 320 V (µm) | 34 | 36 |
| Umgriff * bei 350 V (cm) | 20,4 | 19,7 |
| Erichsentiefung (mm) | 8,7 | > 10 |
| Gitterschnitt ** | 0 | 0 |
| Verlauf ** | 0,5 | 0 |
| Kraterneigung ** | 0 | 0 |

* nach Ford

** 0 = bester Wert, 5 = schlechtester Wert

## Patentansprüche

1. Verwendung eines Kunstharzes, das erhältlich ist durch die Umsetzung
   A) eines Diepoxides oder eines Gemisches von Diepoxiden mit einem Epoxid-Äquivalentgewicht unter 500 mit
   B) Verbindungen mit nur einer gegenüber Epoxidgruppen reaktiven alkoholischen Hydroxylgruppe im Molverhältnis von 2:1 bis 7:6, bevorzugt 2:1 bis 5:4, besonders bevorzugt 2:1 bis 4:3 bei Temperaturen von 100 bis 180 °C in einem hydroxylgruppenfreien organischen Lösungsmittel zu einem endständige Epoxidgruppen aufweisenden Reaktionsprodukt mit einem mittleren Molekulargewicht von 400 bis 5000 und weitere Umsetzung dieses Reaktionsproduktes mit
   D) primären und/oder sekundären Aminen oder deren Salzen und/oder dem Salz eines tertiären Amins oder einer Sulfid/Säure - oder Phosphin/Säure Mischung und gegebenenfalls zumindest teilweiser Neutralisierung mit einer Säure,
   als Bindemittel für Elektrotauchbäder für das kathodische Elektrotauchlackierverfahren.

2. Verfahren zum elektrophoretischen Beschichten eines elektrisch leitenden, als Kathode geschalteten Substrats aus einem wäßrigen Bad auf Basis mindestens teilweise mit Säure neutralisierter kationischer Bindemittel, wobei die Bindemittel durch Umsetzung selbstvernetzbar gemacht worden sind oder das Bad ein zusätzliches Vernetzungsmittel enthält, dadurch gekennzeichnet, daß die Bindemittel erhältlich sind durch die Umsetzung
   A) eines Diepoxides oder eines Gemisches von Diepoxiden mit einem Epoxid-Äquivalentgewicht unter 500 mit
   B) Verbindungen mit nur einer gegenüber Epoxidgruppen reaktiven alkoholischen Hydroxylgruppe im Molverhältnis von 2:1 bis 7:6, bevorzugt 2:1 bis 5:4, besonders bevorzugt 2:1 bis 4:3 bei Temperaturen von 100 bis 180 °C in einem hydroxylgruppenfreien organischen Lösungsmittel zu einem endständige Epoxidgruppen aufweisenden Reaktionsprodukt mit einem mittleren Molekulargewicht von 400 bis 5000 und weitere Umsetzung dieses Reaktionsproduktes mit
   D) primären und/oder sekundären Aminen oder deren Salzen und/oder dem Salz eines tertiären Amins oder einer Sulfid/Säure - oder Phosphin/Säure Mischung und gegebenenfalls zumindest

teilweiser Neutralisierung mit einer Säure.

3. Verwendung oder Verfahren gemäß Anspruch 1 oder 2, dadurch gekennzeichnet, daß das aus A) und B) erhaltene Reaktionsprodukt vor der Umsetzung mit der Komponente D) mit C) 5 - 60 Gewichtsprozent, bezogen aud die Summe der Komponenten A), B) und C), eines polyfunktionellen Alkohols, einer Polycarbonsäure, eines Polyamins, eines Polysulfids mit einem Molekulargewicht von 100 bis 3500 oder eines Polyphenols der folgenden allgemeinen Formel

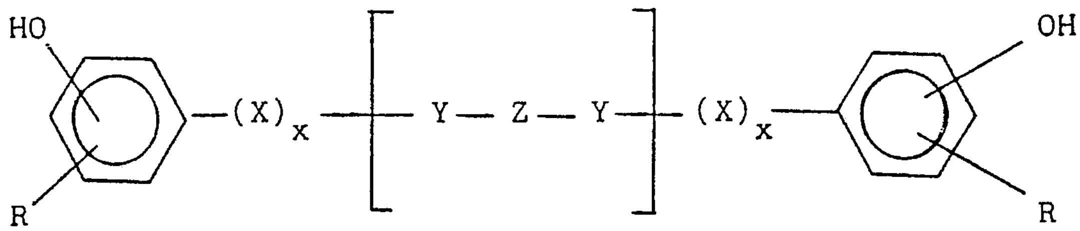

in der bedeuten
X =
Alkylen, Arylen, Alkarylen
O, O-Alkylen, O-Arylen, O-Alkarylen
S, S-Alkylen, S-Arylen, S-Alkarylen
CO, CO-Alkylen, CO-Arylen, CO-Alkarylen
NH, NH-Alkylen, NH-Arylen, NH-Alkarylen
x =
0 oder 1

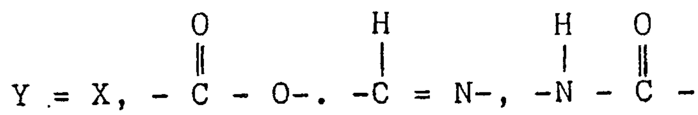

Z =
Alkylen, Alkylenrest auf Basis von Polyestern, Polyethern, Polyamiden, Polycarbonaten, Polyurethanen
R =
H, $CH_3$, Alkyl, -O - $CH_3$, - O-Alkyl,
- $NO_2$.
weiter umgesetzt worden ist, wobei der Anteil der Komponente C in Abhängigkeit von ihrem Molekulargewicht so gewählt worden ist, daß das molare Verhältnis des Reaktionsproduktes aus A und B zur Komponente C 4 : 1 bis 0,8 : 1, bevorzugt 2 : 1 beträgt.

4. Verwendung oder Verfahren nach einem der Ansprüche 1 bis 3, dadurch gekennzeichnet, daß die Komponente B) außer der reaktiven Hydroxylgruppe mindestens eine sterisch gehinderte, gegenüber Epoxidgruppen nicht reaktive Hydroxylgruppe aufweist.

5. In Wasser dispergierbares Kunstharz, das erhältlich ist durch die Umsetzung
A) eines Diepoxides oder eines Gemisches von Diepoxiden mit einem Epoxid-Äquivalentgewicht unter 500 mit
B) Verbindungen mit nur einer gegenüber Epoxidgruppen reaktiven alkoholischen Hydroxylgruppe im Molverhältnis von 2:1 bis 7:6, bevorzugt 2:1 bis 5:4, besonders bevorzugt 2:1 bis 4:3 bei Temperaturen von 100 bis 180 °C in einem hydroxylgruppenfreien organischen Lösungsmittel zu einem endständige Epoxidgruppen aufweisenden Reaktionsprodukt mit einem mittleren Molekulargewicht von 400 bis 5000 und weitere Umsetzung dieses Reaktionsproduktes mit
D) primären und/oder sekundären Aminen oder deren Salzen und/oder dem Salz eines tertiären Amins oder einer Sulfid/Säure - oder Phosphin/Säure Mischung und gegebenenfalls zumindest teilweiser Neutralisierung mit einer Säure.

6. Verfahren zur Herstellung eines in Wasser dispergierbaren Kunstharzes, dadurch gekennzeichnet, daß

A) ein Diepoxid oder ein Gemisch von Diepoxiden mit einem Epoxid-Äquivalentgewicht unter 500 mit

B) Verbindungen mit nur einer gegenüber Epoxidgruppen reaktiven alkoholischen Hydroxylgruppe im Molverhältnis von 2:1 bis 7:6, bevorzugt 2:1 bis 5:4, besonders bevorzugt 2:1 bis 4:3 bei Temperaturen von 100 bis 180 °C in einem hydroxylgruppenfreien organischen Lösungsmittel zu einem endständige Epoxidgruppen aufweisenden Reaktionsprodukt mit einem mittleren Molekulargewicht von 400 bis 5000 umgesetzt wird und dieses Reaktionsprodukt mit

D) primären und/oder sekundären Aminen oder deren Salzen und/oder dem Salz eines tertiären Amins oder einer Sulfid/Säure - oder Phosphin/Säure Mischung umgesetzt und das so erhaltene Reaktionsprodukt gegebenenfalls zumindest teilweise mit einer Säure neutralisiert wird.

7. Kunstharz oder Verfahren nach Anspruch 5 oder 6, dadurch gekennzeichnet, daß das aus A) und B) erhaltene Reaktionsprodukt vor der Umsetzung mit der Komponente D) mit C) 5 - 60 Gewichtsprozent, bezogen auf die Summe der Komponenten A) B) und C), eines polyfunktionellen Alkohols, einer Polycarbonsäure, eines Polyamins, eines Polysulfids mit einem Molekulargewicht von 100 bis 3500 oder eines Polyphenols der folgenden allgemeinen Formel

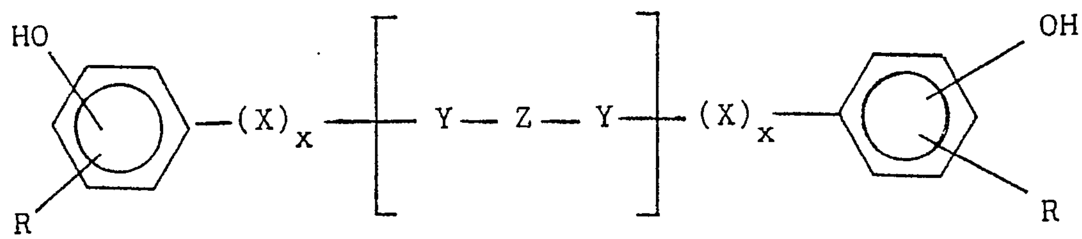

in der bedeuten

X =

Alkylen, Arylen, Alkarylen

O, O-Alkylen, O-Arylen, O-Alkarylen

S, S-Alkylen, S-Arylen, S-Alkarylen

CO, CO-Alkylen, CO-Arylen, CO-Alkarylen

NH, NH-Alkylen, NN-Arylen, NH-Alkarylen

x =

0 oder 1

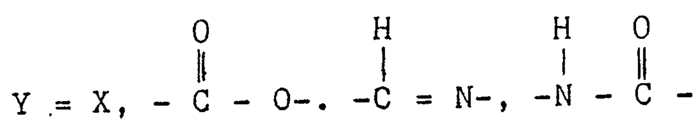

Z =

Alkylen, Alkylenrest auf Basis von Polyestern, Polyethern, Polyamiden, Polycarbonaten, Polyurethanen

R =

H, $CH_3$, Alkyl, -O - $CH_3$, - O-Alkyl,

- $NO_2$.

weiter umgesetzt worden ist, wobei der Anteil der Komponente C in Abhängigkeit von ihrem Molekulargewicht so gewählt worden ist, daß das molare Verhältnis des Reaktionsproduktes aus A und B zur Komponente C 4 : 1 bis 0,8 : 1, bevorzugt 2 : 1 beträgt.

8. Kunstharz oder Verfahren nach einem der Ansprüche 5 bis 7, dadurch gekennzeichnet, daß die Komponente B) außer der reaktiven Hydroxylgruppe mindestens eine sterisch gehinderte, gegenüber Epoxidgruppen nicht reaktive Hydroxylgruppe aufweist

## Claims

1. Use of a synthetic resin, which is obtainable by reacting

A) a diepoxide or a mixture of diepoxides having an epoxide equivalent weight of less than 500 with

B) compounds having only one alcoholic hydroxyl group reactive towards epoxide groups, in a molar ratio of 2:1 to 7:6, preferably 2:1 to 5:4, particularly preferably 2:1 to 4:3, at temperatures from 100 to 180 °C in an organic solvent free of hydroxyl groups to give a reaction product having terminal epoxide groups and a mean molecular weight from 400 to 5000, and further reaction of this reaction product with

D) primary and/or secondary amines or salts thereof and/or the salt of a tertiary amine or a sulphide/acid mixture or phosphine/acid mixture and, if appropriate, at least partial neutralisation with an acid,

as a binder for electrodipping baths for the cathodic electrodipping process.

**2.** A process for electrophoretically coating an electrically conductive substrate, connected as the cathode, from an aqueous bath based on a cationic binder at least partially neutralised with acid, the binders having been rendered self-crosslinkable by reaction or the bath containing an additonal crosslinking agent, characterised in that the binders can be obtained by reacting

A) a diepoxide or a mixture of diepoxides having an epoxide equivalent weight of less than 500 with

B) compounds having only one alcoholic hydroxyl group reactive towards epoxide groups, in a molar ratio of 2:1 to 7:6, preferably 2:1 to 5:4, particularly preferably 2:1 to 4:3, at temperatures from 100 to 180 °C in an organic solvent free of hydroxyl groups to give a reaction product having terminal epoxide groups and a mean molecular weight from 400 to 5000, and further reaction of this reaction product with

D) primary and/or secondary amines or salts thereof and/or the salt of a tertiary amine or a sulphide/acid mixture or phosphine/acid mixture and, if appropriate, at least partial neutralisation with an acid.

**3.** Use or process according to Claim 1 or 2, characterised in that the reaction product obtained from A) and B) has been reacted further, before the reaction with component D), with C) 5 - 60 per cent by weight, relative to the total of components A), B) and C), of a polyfunctional alcohol, a polycarboxylic acid, a polyamine, a polysulphide having a molecular weight from 100 to 3500 or a polyphenol of the following general formula

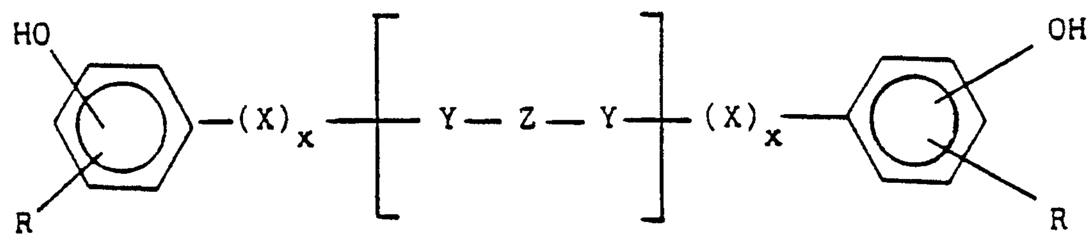

where

X =

alkylene, arylene, alkarylene

O, O-alkylene, O-arylene, O-alkarylene

S, S-alkylene, S-arylene, S-alkarylene

CO, CO-alkylene, CO-arylene, CO-alkarylene

NH, NH-alkylene, NH-arylene or NH-alkarylene x =

0 or 1

Y = X, 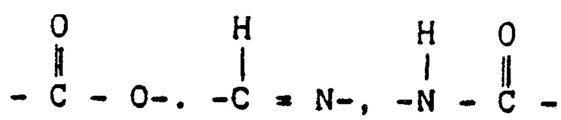

Z =

alkylene or an alkylene radical based on polyesters, polyethers, polyamides, polycarbonates or polyurethanes and

R =

H, $CH_3$, alkyl, -O - $CH_3$, - O-alkyl or $NO_2$,

the proportion of component C having been selected as a function of its molecular weight in such a way that the molar ratio of the reaotion product from A and B to component C is 4 : 1 to 0.8 : 1, preferably 2 : 1.

**4.** Use or process according to one of Claims 1 to 3, characterised in that component B) contains, in addition to the reactive hydroxyl group, at least one sterically hindered hydroxyl group which is not reactive towards epoxide groups.

**5.** Water-dispersible synthetic resin, obtainable by reacting
A) a diepoxide or a mixture of diepoxides having an epoxide equivalent weight of less than 500 with
B) compounds having only one alcoholic hydroxyl group reactive towards epoxide groups, in a molar ratio of 2:1 to 7:6, preferably 2:1 to 5:4, particularly preferably 2:1 to 4:3, at temperatures from 100 to 180 °C in an organic solvent free of hydroxyl groups to give a reaction product having terminal epoxide groups and a mean molecular weight from 400 to 5000, and further reaction of this reaction product with
D) primary and/or secondary amines or salts thereof and/or the salt of a tertiary amine or a sulphide/acid mixture or phosphine/acid mixture and, if appropriate, at least partial neutralisation with an acid.

**6.** Process for preparing a water-dispersible synthetic resin, characterised in that
A) a diepoxide or a mixture of diepoxides having an epoxide equivalent weight of less than 500 is reacted with
B) compounds having only one alcoholic hydroxyl group reactive towards epoxide groups, in a molar ratio of 2:1 to 7:6, preferably 2:1 to 5:4, particularly preferably 2:1 to 4:3, at temperatures from 100 to 180 °C in an organic solvent free of hydroxyl groups to give a reaction product having terminal epoxide groups and a mean molecular weight from 400 to 5000 and this reaction product is reacted with
D) primary and/or secondary amines or salts thereof and/or the salt of a tertiary amine or a sulphide/acid mixture or phosphine/acid mixture and the reaction product thus obtained is, if appropriate, at least partially neutralised with an acid.

**7.** Synthetic resin or process according to Claim 5 or 6, characterised in that the reaction product obtained from A) and B) has been further reacted, before the reaction with component D), with C) 5 - 60 per cent by weight, relative to the total of components A), B) and C), of a polyfunctional alcohol, a polycarboxylic acid, a polyamine, a polysulphide having a molecular weight from 100 to 3500 or a polyphenol of the following general formula

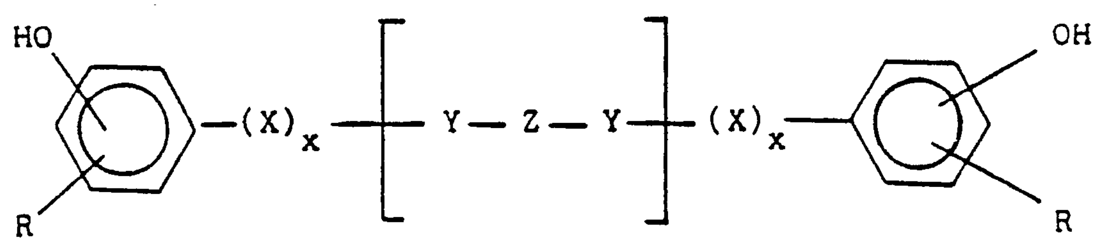

where
X =
alkylene, arylene, alkarylene
O, O-alkylene, O-arylene, O-alkarylene
S, S-alkylene, S-arylene, S-alkarylene
CO, CO-alkylene, CO-arylene, CO-alkarylene
NH, NH-alkylene, NH-arylene, NH-alkarylene x =
0 or 1

$$Y = X,\ -\overset{\overset{\displaystyle O}{\|}}{C}-O-,\ -\overset{\overset{\displaystyle H}{|}}{C}=N-,\ -\overset{\overset{\displaystyle H}{|}}{N}-\overset{\overset{\displaystyle O}{\|}}{C}-$$

Z =
alkylene or an alkylene radical based on polyesters, polyethers, polyamides, polycarbonates or polyurethanes and,
R =
H, $CH_3$, alkyl, -O - $CH_3$, - O-alkyl or -$NO_2$
the proportion of component C having been selected as a function of its molecular weight in such a way that the molar ratio of the reaction product from A and B to component C is 4 : 1 to 0.8 : 1, preferably 2 : 1.

**8.** Synthetic resin or process according to one of Claims 5 to 7, characterised in that component B) contains, in addition to the reactive hydroxyl group, at least one sterically hindered hydroxyl group which is not reactive towards epoxide groups.

**Revendications**

**1.** Utilisation d'une résine synthétique, que l'on peut obtenir par la réaction :
(A) d'un diépoxyde ou d'un mélange de diépoxydes ayant un poids équivalent en époxyde inférieur à 500, avec
(B) des composés n'ayant qu'un groupe hydroxyle alcoolique capable de réagir vis-à-vis des groupes époxyde, dans un rapport molaire de 2:1 à 7:6, de préférence, de 2:1 à 5:4, de façon particulièrement préférée, de 2:1 à 4:3, à des températures de 100 à 180 °C, dans un solvant organique exempt de groupes hydroxyle, pour obtenir un produit de réaction présentant des groupes époxyde terminaux, et ayant une masse moléculaire moyenne de 400 à 5000, et réaction ultérieure de ce produit de réaction avec
(D) des amines primaires et/ou secondaires ou leurs sels et/ou le sel d'une amine tertiaire ou un mélange sulfure/acide ou phosphine/acide et, le cas échéant, neutralisation au moins partielle par un acide,
comme liant pour bains d'électrodéposition pour le procédé de laquage par électrodéposition cathodique.

**2.** Procédé pour le revêtement électrophorétique d'un substrat conducteur de l'électricité, monté en cathode, à partir d'un bain aqueux à base de liants cationiques au moins partiellement neutralisés par un acide, les liants ayant été rendus auto-réticulables par réaction ou le bain contenant un agent de réticulation additionnel, caractérisé par le fait que les liants peuvent être obtenus par la réaction :
(A) d'un diépoxyde ou d'un mélange de diépoxydes ayant un poids équivalent en époxyde inférieur à 500, avec
(B) des composés n'ayant qu'un groupe hydroxyle alcoolique capable de réagir vis-à-vis des groupes époxyde, dans un rapport molaire de 2:1 à 7:6, de préférence, de 2:1 à 5:4, de façon particulièrement préférée, de 2:1 à 4:3, à des températures de 100 à 180 °C, dans un solvant organique exempt de groupes hydroxyle, pour obtenir un produit de réaction présentant des groupes époxyde terminaux, et ayant une masse moléculaire moyenne de 400 à 5000, et réaction ultérieure de ce produit de réaction avec
(D) des amines primaires et/ou secondaires ou leurs sels et/ou le sel d'une amine tertiaire ou un mélange sulfure/acide ou phosphine/acide et, le cas échéant, neutralisation au moins partielle par un acide,

**3.** Utilisation ou procédé selon la revendication 1 ou 2, caractérisé(e) par le fait que le produit de réaction obtenu à partir de (A) et (B) a encore été mis à réagir, avant la réaction avec le composant (D), avec (C) 5-60 pour cent en poids, par rapport à la somme des composants (A), (B) et (C), d'un alcool polyfonctionnel, d'un acide polycarboxylique, d'une polyamine, d'un polysulfure ayant une masse moléculaire de 100 à 3500 ou un polyphénol de la formule générale suivante :

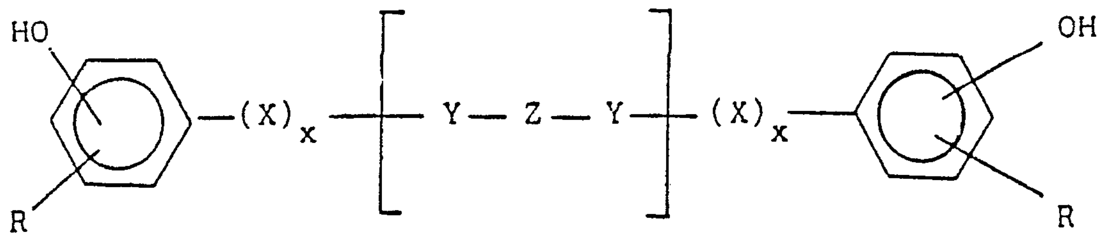

dans laquelle :

- X = alkylène, arylène, alkarylène, O, O-alkylène, O-arylène, O-alkarylène, S, S-alkylène, S-arylène, S-alkarylène, CO, CO-alkylène, CO-arylène, CO-alkarylène, NH, NH-alkylène, NH-arylène, NH-alkarylène,
- x = 0 ou 1
- Y = X, 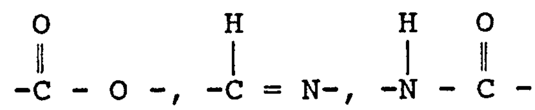
- X = alkylène, reste alkylène à base de polyesters, de polyéthers, de polyamides, de polycarbonates, de polyuréthannes,
- R = H, $CH_3$, alkyle, -O - $CH_3$, -O-alkyle, -$NO_2$,

la fraction du composant C ayant été choisie en fonction de sa masse moléculaire, de sorte que le rapport molaire du produit de réaction de (A) et (B) au composant (C) s'élève à une valeur de 4:1 à 0,8:1, de préférence à 2:1.

**4.** Utilisation ou procédé selon l'une des revendications 1 à 3, caractérisé(e) par le fait que le composant (B) présente, en dehors du groupe hydroxyle réactif, au moins un groupe hydroxyle non-réactif vis-à-vis des groupes époxyde, à encombrement stérique.

**5.** Résine synthétique dispersable dans l'eau, qui peut être obtenue par la réaction :
(A) d'un diépoxyde ou d'un mélange de diépoxydes ayant un poids équivalent en époxyde inférieur à 500, avec
(B) des composés n'ayant qu'un groupe hydroxyle alcoolique capable de réagir vis-à-vis des groupes époxyde, dans un rapport molaire de 2:1 à 7:6, de préférence, de 2:1 à 5:4, de façon particulièrement préférée, de 2:1 à 4:3, à des températures de 100 à 180 °C, dans un solvant organique exempt de groupes hydroxyle, pour obtenir un produit de réaction présentant des groupes époxyde terminaux et ayant une masse moléculaire moyenne de 400 à 5000, et réaction ultérieure de ce produit de réaction avec
(D) des amines primaires et/ou secondaires ou leurs sels et/ou le sel d'une amine tertiaire ou un mélange sulfure/acide ou phosphine/acide et, le cas échéant, neutralisation au moins partielle par un acide.

**6.** Procédé de fabrication d'une résine synthétique dispersable dans l'eau, caractérisé par le fait qu'on fait réagir :
(A) un diépoxyde ou un mélange de diépoxydes ayant un poids équivalent en époxyde inférieur à 500, avec
(B) des composés n'ayant qu'un groupe hydroxyle alcoolique capable de réagir vis-à-vis des groupes époxyde, dans un rapport molaire de 2:1 à 7:6, de préférence, de 2:1 à 5:4, de façon particulièrement préférée, de 2:1 à 4:3, à des températures de 100 à 180 °C, dans un solvant organique exempt de groupes hydroxyle, pour obtenir un produit de réaction présentant des groupes époxyde terminaux, et ayant une masse moléculaire moyenne de 400 à 5000, et qu'on fait réagir ce produit de réaction avec
(D) des amines primaires et/ou secondaires ou leurs sels et/ou le sel d'une amine tertiaire ou un mélange sulfure/acide ou phosphine/acide et, le cas échéant, qu'on neutralise au moins partiellement

par un acide.

7. Résine synthétique ou procédé selon la revendication 5 ou 6, caractérisé(e) par le fait que le produit de réaction obtenu à partir de (A) et (B) a encore été mis à réagir, avant la réaction avec le composant (D), avec (C) 5-60 pour cent en poids, par rapport à la somme des composants (A), (B) et (C), d'un alcool polyfonctionnel, d'un acide polycarboxylique, d'une polyamine, d'un polysulfure ayant une masse moléculaire de 100 à 3500 ou un polyphénol de la formule générale suivante :

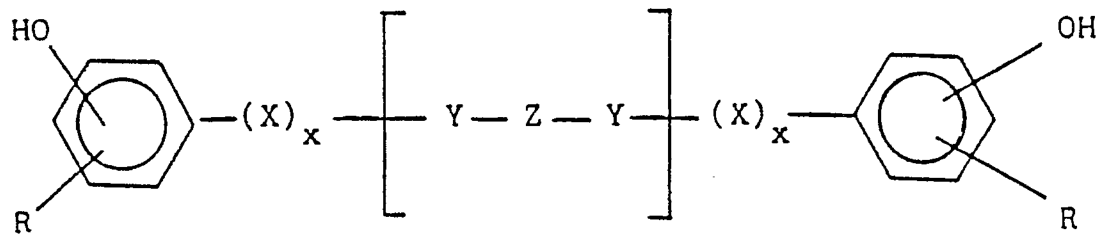

dans laquelle :
- X = alkylène, arylène, alkarylène, O, O-alkylène, O-arylène, O-alkarylène, S, S-alkylène, S-arylène, S-alkarylène, CO, CO-alkylène, CO-arylène, CO-alkarylène, NH, NH-alkylène, NH-arylène, NH-alkarylène,
- x = 0 ou 1
- Y = X, 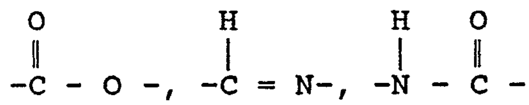
- Z - alkylène, reste alkylène à base de polyesters, de polyéthers, de polyamides, de polycarbonates, de polyuréthannes,
- R = H, $CH_3$, alkyle, -O - $CH_3$, -O-alkyle, -$NO_2$,

la fraction du composant C ayant été choisie en fonction de sa masse moléculaire, de sorte que le rapport molaire du produit de réaction de (A) et (B) au composant (C) s'élève à une valeur de 4:1 à 0,8:1, de préférence à 2:1.

8. Résine synthétique ou procédé selon l'une des revendications 5 à 7, caractérisé(e) par le fait que le composant (B) présente, en dehors du groupe hydroxyle réactif, au moins un groupe hydroxyle non-réactif vis-à-vis des groupes époxyde, à encombrement stérique.